(19) Europäisches Patentamt
European Patent Office
Office européen des brevets

(11) **EP 2 541 215 B1**

(12) **EUROPEAN PATENT SPECIFICATION**

(45) Date of publication and mention
of the grant of the patent:
**08.07.2015 Bulletin 2015/28**

(51) Int Cl.:
***G01D 5/20*** *(2006.01)*

(21) Application number: **10846561.8**

(22) Date of filing: **29.03.2010**

(86) International application number:
**PCT/JP2010/055576**

(87) International publication number:
**WO 2011/104898 (01.09.2011 Gazette 2011/35)**

(54) **METHOD OF DETECTING ROTATIONAL ANGLE OR METHOD OF WINDING FOR SYNCHRONIZING DEVICE WINDINGS**

VERFAHREN ZUR ERKENNUNG EINES DREHWINKELS ODER WICKELVERFAHREN ZUR SYNCHRONISATION VON GERÄTEWICKLUNGEN

PROCÉDÉ DE DÉTECTION D'ANGLE DE ROTATION OU PROCÉDÉ DE BOBINAGE POUR SYNCHRONISER DES ENROULEMENTS DE DISPOSITIF

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.02.2010 JP 2010037464**

(43) Date of publication of application:
**02.01.2013 Bulletin 2013/01**

(73) Proprietor: **Tamagawa Seiki Co., Ltd.**
**Iida-shi**
**Nagano 395-8515 (JP)**

(72) Inventors:
• **KUBOTA, Yonezou**
**Iida-shi**
**Nagano 395-8515 (JP)**
• **KIKUCHI, Yoshimi**
**Iida-shi**
**Nagano 395-8515 (JP)**

(74) Representative: **Franke, Dirk**
**Franke & Partner**
**Patent- und Rechtsanwälte**
**Widenmayerstraße 25**
**80538 München (DE)**

(56) References cited:
**EP-A- 0 802 398        WO-A1-2007/029678**
**WO-A1-2009/145085    JP-A- 6 229 780**
**JP-A- 8 178 611        JP-A- 2007 327 869**

**Description**

TECHNICAL FIELD

The invention relates to a winding method for an output wire wound around stator teeth of a stator of a rotation angle detecting apparatus, such as a resolver, or a rotation angle synchronizing apparatus, such as a synchro, and particularly relates to a winding method of winding by which an output signal is output as a sine-wave signal from an output wire.

BACKGROUND ART

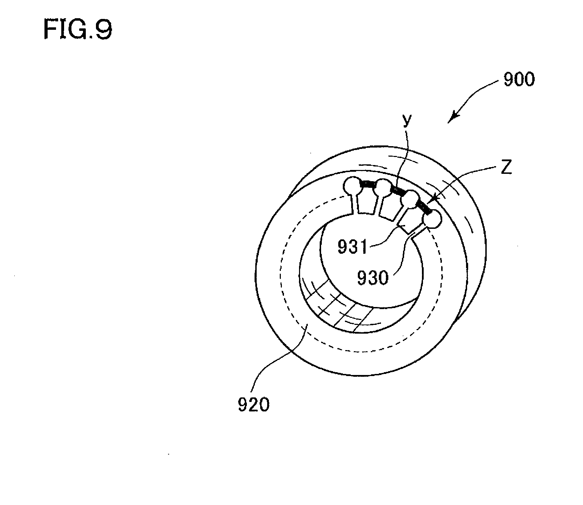

A rotation angle detecting or synchronizing apparatus, such as a resolver and synchro, has been known for years as an apparatus that has a stator and a rotor and that outputs an output signal corresponding to a rotation angle of the rotor by utilizing a phenomenon that magnetic properties between the stator and the rotor change with the rotation of the rotor (see, e.g., patent document 1). Fig. 9 depicts a resolver serving as a conventional rotation angle detecting apparatus of the above type. The resolver 900 of Fig. 9 includes a ring-like stator 920 having a plurality of stator teeth 931 formed as an annular chain of stator teeth projecting inward from the inner peripheral surface of the stator 920. Inside the stator 920, a rotor (not depicted) is so disposed that the rotor is rotatable relative to the stator 920 and that a gap permeance between the rotor and each of the stator teeth 931 changes cyclically with rotations.

Each of the stator teeth 931 formed on the stator 920 is wound with an exciting wire (not depicted) such that an external exciting signal is input and the directions of winding at adjacent stator teeth are opposite to each other. Each of the stator teeth 931 is also wound with an output wire y that outputs an output signal that changes in correspondence to a rotation angle of the rotor. The output wires y each wound around each of the stator teeth 931 are connected in series to form an output wire group z.

When an exciting signal is input to the exciting wire, each of the stator teeth 931 of the stator 920 is excited to generate magnetic flux. Adjacent stator teeth 931 combine to form slits 930, at each of which a magnetic circuit is formed. Because a gap permeance between the rotor and each slot 930 (each magnetic circuit) changes in correspondence to a rotation angle of the rotor, magnetic flux corresponding to the rotation angle of the rotor is generated in each magnetic circuit. The generated magnetic flux induces an electric signal at the output wire group z. This electric signal is extracted as an output signal, by which the rotation angle of the rotor is detected.

According to the conventional rotation angle detecting apparatus of the above type, adjusting the number of turns of the output wire y wound around each of the stator teeth 931 leads to output of an output signal as a sine-wave signal that changes sinusoidally in correspondence to a rotation angle of the rotor. The following equation (51) is the equation representing the number of turns of the output wire y wound around each of the stator teeth 931, which number of turns is proposed in patent document 1. In the conventional rotation angle detecting apparatus, the number of turns represented by the equation (51) is set for each of the stator teeth 931 and the output wire y is wound thereon by the set number of turns. As a result, the output wire group z outputs a sine-wave signal as an output signal created by

superposing together signals generated at individual output wires y.

[Eq. 1]

$$N_{k1} = \frac{W\sin[2\pi P/S\{(k-1)+\frac{1}{2}\}]}{\sum_{i=1}^{s}\sin\ [2\pi P/S\{(i-1)+\frac{1}{2}\}]}$$

$$N_{k2} = \frac{W\sin[2\pi P/S\{(k-1)+\frac{1}{2}\}+\frac{2\pi}{n}]}{\sum_{i=1}^{s}\sin\ [2\pi P/S\{(i-1)+\frac{1}{2}\}+\frac{2\pi}{n}]}$$

$$N_{k(n)} = \frac{W\sin[2\pi P/S\{(k-1)+\frac{1}{2}\}+\frac{2\pi(n-1)}{n}]}{\sum_{i=1}^{s}\sin\ [2\pi P/S\{(i-1)+\frac{1}{2}\}+\frac{2\pi n-1)}{n}]}$$

$$\left.\right\} (51)$$

where Nk(n) denotes the number of turns of a wire in a slot that is any one of 1 to S slots (arbitrary integer i= 1 to S) or the k-th slot in the (n)-th wire group among wire groups of n phases;
W denotes the total number of wires (total of wires each wound in each of 1 to S slots (i= 1 to S) in one phase); and
S denotes the number of slots.

Each of the stator teeth 931 is wound with output wires y of n phases, so that output wire groups z of n phases are formed. In the output wire groups z, the number of turns of each of the output wires y is adjusted so that sine-wave signals different in phase from each other are output. In the case of a resolver, for example, output wire groups z of 2 phases are wound, and the output wire group z of one phase outputs a sine-wave signal while the output wire group z of the other phase outputs a cosine-wave signal. One form of a rotation angle synchronizing apparatus is, for example, a synchro. In a conventional synchro, output wire groups z of three phases defined in the equation (51) are wound, and these output wire groups z output sine-wave signals shifted in phase to each other by 120 degrees, respectively. Usually, the synchro is used to synchronize the operations of a plurality of devices and serves in the form of a set of a synchro transmitter and a synchro receiver. These syncho transmitter and synchro receiver are identical in structure, which means both have a stator, a rotor, and stator teeth wound with output wire groups z of three phases. By connecting each of the output wire groups z of the synchro transmitter to the same of the synchro receiver, the rotor of the synchro receiver is matched in position to the rotor of the synchro transmitter, that is, both rotors are synchronized. It should be noted that "synchro" mentioned in the specification refers to each of the syncro transmitter and the synchro receiver. In the same manner as the synchro does, the rotation angle synchronizing apparatus refers to each of a transmission-side apparatus and a reception-side apparatus used in a rotation angle synchronizing system including the transmission-side apparatus and the reception-side apparatus.

PRIOR ART DOCUMENTS

Patent Documents

Patent document 1: Japanese Patent No. 3171737

SUMMARY OF THE INVENTION

PROBLEM TO BE SOLVED BY THE INVENTION

The conventionally used equation (51) is a fractional equation having denominators and numerators defined by numerical expressions and is composed of many terms. The equation (51) is thus complicated in its form, which poses a problem that the number of turns cannot be set easily using the equation. It is therefore the object of the invention to provide a winding method of winding for a rotation angle detecting or synchronizing apparatus for causing an output wire group to output a sine-wave signal, by which winding method the number of turns can be set easier than a conventional case.

MEANS FOR SOLVING PROBLEM

In order to solve the above problem, the invention provides a winding method of winding of the output wire in a rotation angle detecting or synchronizing apparatus which comprises: a stator having a plurality of stator teeth formed as an annular chain of stator teeth; a rotor disposed to be rotatable relative to the stator; an exciting wire to which an exciting signal is input, the exciting wire being wound around each of the stator teeth in order such that the directions of winding at adjacent stator teeth are opposite to each other; and an output wire group formed by connecting output wires each wound around each of the stator teeth in series with each other, the output wire group outputting magnetic flux generated by the exciting wire and changing in correspondence to a rotation angle of the rotor, as a sine-wave signal. According to the winding method, when a number is assigned to each of the stator teeth in accordance with the order of arrangement of the stator teeth, the number of turns W (k) of the output wire wound around the k-th stator tooth of the stator teeth is set by the following equation (1).
[Eq. 2]

$$W(k) = MaxTrn \cdot (-1)^k \cdot \cos(2k\pi \cdot \frac{X}{S} + \phi) \ \ ----- (1)$$

where MaxTrn denotes the maximum number of turns at each
of the stator teeth;
S denotes the number of slots;
X denotes the number of poles of the rotor; and
$\Phi$ denotes the phase adjusting parameter.

The inventors have found that when the output wire is wound around each of the stator teeth by the number of turns W(k) set by the equation (1), a sine-wave signal that changes in corresponding to a rotation angle of the rotor is output from the output wire group. This equation (1) is not a fractional equation and is composed of fewer terms. Hence the number of turns can be set easier than a conventional case.
The output wire group according to the invention outputs an output signal $Vo_{sum}$ represented by the following equation (2).
[Eq. 3]

$$Vo_{sum} = \alpha \cdot \cos(X\theta - \phi - m\pi) \ \ ----- (2)$$

where $\alpha = \cos(m\pi)$;

$m = \frac{X}{S}$ ; and

$\theta$ denotes a rotation angle of the rotor.

In this manner, the output wire group outputs a sine-wave signal with a parameter of a rotation angle ••• of the rotor, which signal is represented by the equation (2). The rotation angle $\theta$ of the rotor, therefore, can be detected based on the value of the sine-wave signal.
While the number of turns is expressed as a cosine function in the above equation (1), the number of turns may be expressed also as a sine function. The invention provides a winding method of winding of the output wire in a rotation angle detecting or synchronizing apparatus which comprises: a stator having a plurality of stator teeth formed as an annular chain of stator teeth; a rotor disposed to be rotatable relative to the stator; an exciting wire to which an exciting signal is input, the exciting wire being wound around each of the stator teeth in order such that the directions of winding at adjacent stator teeth are opposite to each other; and an output wire group formed by connecting output wires each wound around each of the stator teeth in series with each other, the output wire group outputting magnetic flux generated by the exciting wire and changing in correspondence to a rotation angle of the rotor, as a sine-wave signal. According to the winding method, when a number is assigned to each of the stator teeth in accordance with the order of arrangement of the stator teeth, the number of turns W (k) of the output wire wound around the k-th stator tooth of the stator teeth is set by the following equation (3).
[Eq. 4]

$$W(k) = \text{MaxTrn} \cdot (-1)^k \cdot \sin\left(2k\pi \cdot \frac{X}{S} + \phi\right) \quad ----- (3)$$

where MaxTrn denotes the maximum number of turns at each of the stator teeth;
S denotes the number of slots;
X denotes the number of poles of the rotor; and
$\Phi$ denotes the phase adjusting parameter.

In this case, the output wire group outputs the output signal $Vo_{sum}$ represented by the following equation (4).
[Eq. 5]

$$Vo_{sum} = \alpha \cdot \sin(m\pi + \phi - X\theta) \quad ----- (4)$$

where $\alpha = \cos(m\pi)$;

$$m = \frac{X}{S} \quad ; \text{ and}$$

$\theta$ denotes a rotation angle of the rotor.

In this manner, cosine and sine are different in phase from each other by 90 degrees. Hence transforming the equation (1) gives the equation (3), which expresses the number of turns as a sine function. In this case, an output signal output from the output wire group is a signal shifted in phase by 90 degrees to a cosine-wave output signal (equation (2)), that is, a sine-wave output signal (equation (4)).

The rotation angle detecting or synchronizing apparatus according to the invention comprises the output wire groups of n phases formed by winding the output wires of n phases around each of the stator teeth. In the rotation angle detecting or synchronizing apparatus, the number of turns W (k) is set by setting the phase adjusting parameter $\Phi$ for adjusting a phase at each output wire group so that output signals output from the output wire groups have a given mutual phase relation.

In this manner, by setting the phase adjusting parameter $\Phi$ of the equation (1) or equation (3), the number of turns of the output wire groups of n phases that generate output signals having a given mutual phase relation can be set easily.

In this case, the rotation angle detecting apparatus may serve as a resolver having the output wire groups of 2 phases consisting of one output wire group of a sine phase and the other output wire group of a cosine phase.

As described above, it is necessary for the resolver to obtain a sine-wave output signal and a cosine-wave output signal that change in correspondence to a rotation angle of the rotor. The invention, therefore, applies to the resolver in a preferable manner.

According to the invention, when the maximum of the number of turns $W_{sin}(k)$ set by the equation (1) or (3) for the output wire group of the sine phase is $W_{SMAX}$ and the maximum of the number of turns $W_{cos}(k)$ set by the equation (1) or (3) for the output wire group of the cosine phase is $W_{CMAX}$, either of the number of turns $W_{sin}(k)$ for the sine phase and the number of turns $W_{cos}(k)$ for the cosine phase is corrected so that the maximum number of turns $W_{SMAX}$ for the sine phase matches the maximum number of turns $W_{CMAX}$ for the cosine phase.

Thus, since number k in the equation (1) or (3) denotes an integer, the maximum number of turns $W_{SMAX}$ of the output wire group of the sine phase may be different from the maximum number of turns $W_{CMAX}$ of the output wire group of the cosine phase in some cases. In such a case, the relation between an output signal from the output wire group of the sine phase and an output signal from the output wire group of the cosine phase is not exactly the relation between a sine-wave signal and a cosine-wave signal. Detecting a rotation angle of the rotor based on those output signals, therefore, may result in lower detection precision. To prevent this, either of the number of turns $W_{sin}(k)$ for the sine phase and the number of turns $W_{cos}(k)$ for the cosine phase is corrected so that the maximum number of turns $W_{SMAX}$ for the sine phase matches the maximum number of turns $W_{CMAX}$ for the cosine phase. This prevents a decline in detection precision.

Specifically, the number of turns $W_{cos}(k)$ for the cosine phase is corrected using the following equations (5) and (6).

[Eq. 6]

$$Wc = cosMaxTrn/sinMaxTrn \ \text{-----} (5)$$

$$W'_{cos}(k) = Wc \cdot W_{cos}(k) \ \text{-----} (6)$$

Through this correction, the maximum number of turns $W_{SMAX}$ for the sine phase can be matched to the number of turns $W_{cos}(k)$ for the cosine phase.

BRIEF DESCRIPTION OF DRAWINGS

FIG.1 is a perspective view of a resolver 100;
FIG.2 is an exploded perspective view of a stator 200 of FIG.1;
FIG. 3A is an explanatory diagram of an exciting wire 4 wound around stator teeth 210a to 210h of the stator 200;
FIG.3B is an explanatory diagram of an output wire 5 wound around the stator teeth 210a to 210h of the stator 200;
FIG.4 is a diagram for explaining the number of turns and the direction of winding of a stator wire and output signals output from the stator wire;
FIG.5 is a diagrammatic view of the direction of magnetic flux at a certain time at which a rotor 300 is in a state of rotation;
FIG.6 is a diagrammatic view of a distribution of the number of turns W(k) in a resolver with S=10 and X=2;
FIG.7A is a vector diagram of an equation (25) representing βi in a case of S=10 and X=2;
FIG.7B is a diagram created by adding a real number axis and an imaginary number axis to FIG.7A;
FIG.8A is a vector diagram of an equation (41) representing βi in a case of S=10 and X=2;
FIG.8B is a diagram created by adding a real number axis and an imaginary number axis to FIG.8A;
FIG.9 is a diagram of a conventional resolver 900;
FIG.10 is a diagram of a working example in which a resolver is applied to control over a brushless motor;
FIG.11 is a diagram of a working example in which a resolver is applied to control over a hybrid car;
FIG.12 is a diagram of a working example in which a resolver is applied to control over an engine; and FIG.13 is a diagram of an example of use of a synchro.

MODES FOR CARRYING OUT THE INVENTION

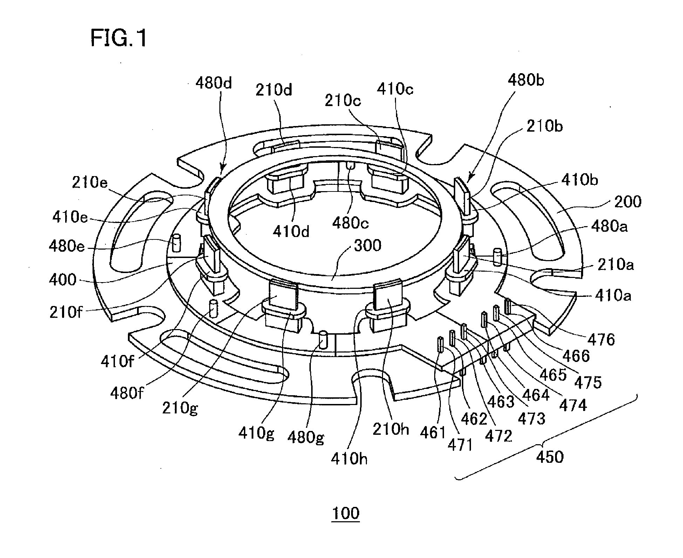

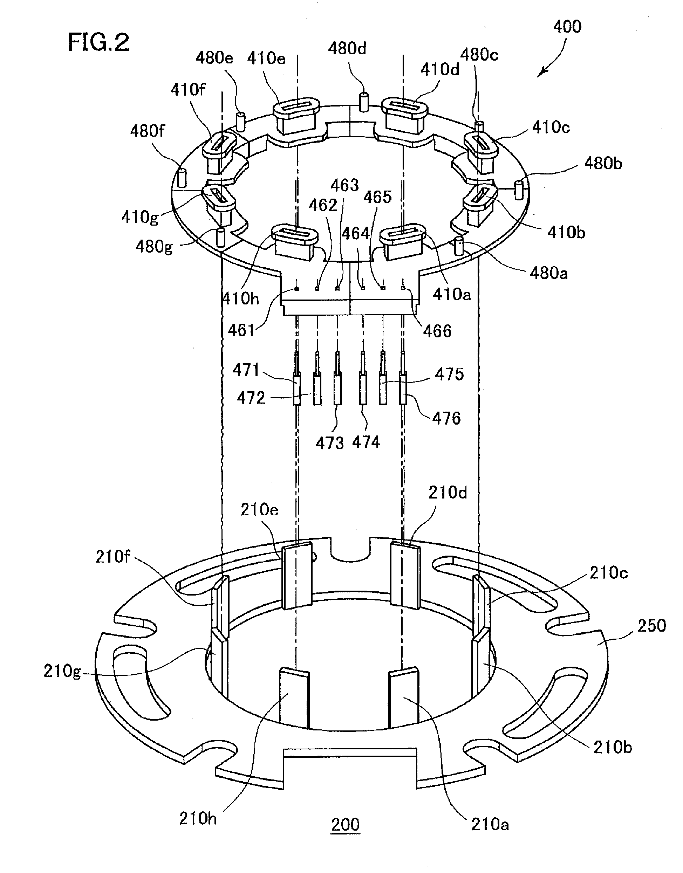

Embodiments of a winding method of winding for a rotation angle detecting or synchronizing apparatus according to the invention will then be described. Fig. 1 is a perspective view of a resolver 100 serving as a rotation angle detecting apparatus having wires wound by the winding method of the invention. In Fig. 1, depiction of wiring, such as a stator wire, is omitted. Fig. 2 is an exploded perspective view of a stator 200 of Fig. 1.

The resolver 100 of Fig. 1 includes the stator 200 and a rotor 300. The resolver 100 is a rotation angle detecting apparatus of so-called inner-rotor type. Specifically, the rotor 300 is disposed inside the stator 200, and as the stator 200 set faced with the outer periphery of the rotor 300, an output signal from an output wire group making up a stator wire set on the stator 200 changes in correspondence to a rotation angle of the rotor 300.

The stator 200 is composed of an annular (ringlike) plate 250 made of a magnetic material, and an annular chain of stator teeth 210 are formed on the plate 250. These stator teeth 210 are formed such that the stator teeth 210 cross the plate 250. In Fig. 1, the stator 200 consist of eight stator teeth 210a, 210b, 210c, 210d, 210e, 210f,210g, and 210h that are erected by a bending process, etc., to be substantially perpendicular to the same surface of the plate 250. The stator teeth 210a, 210b, 210c, 210d, 210e, 210f, 210g, and 210h are formed on the plate 250 by press working, etc., and then are erected to be substantially perpendicular to the surface of the plate 250 by bending press working. These stator teeth 210a to 210h are formed on the inner edge (inner diameter side) of the annular plate 250. Out of faces of each of the stator teeth 210a to 210h, at least a face facing the rotor 300 is not formed into a flat face but into a part of an arc with its center located in the inner diameter side of the annular plate 250 in a view along the direction of the rotation axis of the rotor 300.

The stator 200 is fitted with an insulating cap 400 that is structured to be attachable to the plate 250. The insulating cap 400 has a plurality of bobbins 410a, 410b, 410c, 410d, 410e, 410f, 410g, and 410h that are formed integrally with the insulating cap 400 such that the bobbins 410a to 410h correspond in position to the stator teeth 210a to 210h, respectively. Each of the bobbins 410a to 410h has a stator tooth insertion hole. Each of the stator teeth 210a to 210h is inserted in the stator tooth insertion hole of each corresponding bobbin, the exterior of which is wound with the stator wire. The direction of the stator tooth insertion hole of each of the bobbins 410a to 410h is the same as the direction of the rotation axis of the rotor 300.

The insulating cap 400 includes a connector unit 450 having terminal pins electrically connected to the stator wire wound around the exterior of each of the bobbins 410a to 410h, which is formed integrally with the connector unit 450. The connector unit 450 has terminal pin insertion holes 461 to 466, into which terminal pins 471 to 476 made of a conductive material that are electrically connected to the stator wire are inserted, respectively. An external exciting signal is applied to the stator wire via any one of the terminal pin 471 to 476, and an output signal is output from the stator wire via any one of the terminal pin 471 to 476.

The insulating cap 400 also includes a plurality of bridge pins 480a, 480b, 480c, 480d, 480e, 480f, and 480g. The bobbins 410a to 410h, the connector unit 450, and the bridge pins 480a to 480g are formed integrally together. The bridge pins 480a to 480g are formed on the annular insulating cap 400 such that each bridge pin is located between two bobbins. Between the bobbins 410a and 410h, however, no bridge pin is formed. Each of the bridge pins 480a to 480g located between two bobbins has a columnar shape. A conductor electrically connected to the stator wire wound around the exterior of one of two bobbins is put over the bridge pin with a tensile force given to the conductor, and is electrically connected to the stator wire wound around the exterior of the other one of two bobbins. In this arrangement, resonance hardly occurs even if the distance between two bobbins becomes longer and the number of turns of the stator wire can be adjusted half-turn by half-turn. To easily give a tensile force to the conductor and maintain the tensioned state of the conductor as long as possible, the bridge pin should preferably have a part set in the same direction as the direction of the rotation axis of the rotor 300.

By fitting such an insulating cap 400 on the plate 250 of the stator 200, the stator 200 is electrically insulated from the stator wire. This prevents the dielectric breakdown of a coil composed of the stator wire. The insulating cap 400 is formed by plastic working using an insulating resin (insulating material), such as PBT (Polybutylene terephthalate) or PPT (Polypropylene terephthalate).

The rotor 300 is made of a magnetic material, and is disposed to be rotatable relative to the stator 200. More specifically, the rotor 300 is disposed to be rotatable relative to the stator 200 so that the rotation of the rotor 300 around its rotation axis changes a gap permeance between the rotor 300 and each of the stator teeth 210a to 210h. For example, the rotor 300 has a multiplication factor of angle of "2" and has a shape such that the rotor's outer diameter outline on the outer diameter side in a plan view changes at two cycles for one rotation along a reference circumference line defined with a given radius. Hence gap permeances between the inner faces (inner diameter side, inner circumference side) of the stator teeth 210a to 210h erected against the plate 250 and the outer circumferential surface of the rotor 300 facing the inner faces of the stator teeth 210a to 210h change at two cycles for one rotation of the rotor 300.

A stator wire for extracting an output signal output from an output wire by the rotation of the rotor 300 will then be described, the stator wire constituting a feature of the invention. The stator wire consists of an exciting wire and an output wire. When the rotor 300 rotates relative to the stator 200 as the stator wire is in an excited state created by the exciting wire, an output signal from the output wire changes.

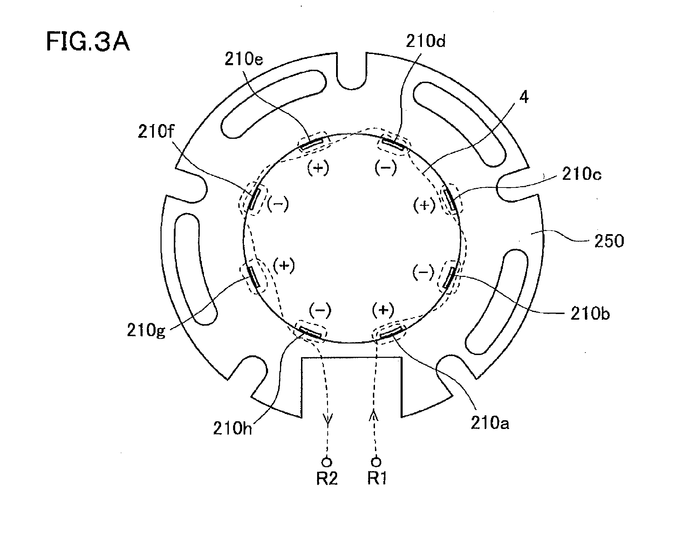

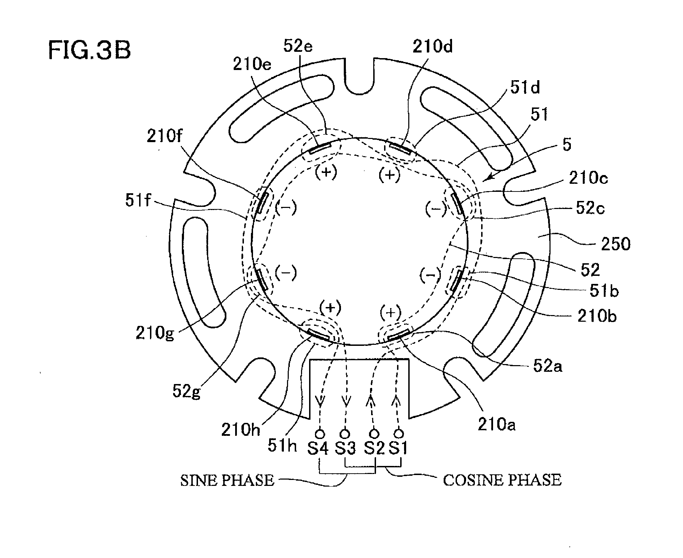

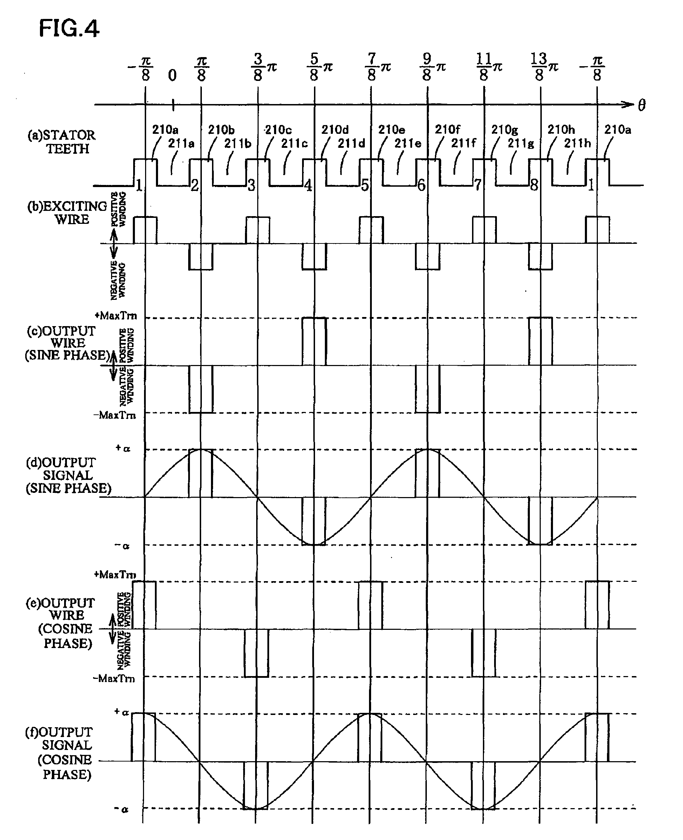

Figs. 3A and 3B are explanatory diagrams of the stator wire wound around the stator teeth 210a to 210h of the stator 200. Fig. 3A is a plan view of the stator 200 with the exciting wire 4 wound around the stator teeth 210a to 210h, and Fig. 3B is a plan view of the stator 200 with the output wire 5 wound around the stator teeth 210a to 210h. Although Figs. 3A and 3B separately depict the exciting wire 4 in a wound state and the output wire 5 in a wound state, respectively, both exciting wire 4 and output wire 5 are actually wound together around each of the stator teeth 210a to 210h. For example, the exciting wire 4 is wound around the part of stator teeth 210a to 210h closer to their bases as the output wire 5 is wound around the part of stator teeth 210a to 210h closer to their front ends, which means that the exciting wire 4 and the output wire 5 are wound separately around different locations of each of the stator teeth. Fig. 4 is a diagram for explaining the number of turns and the direction of winding of the stator wire wound around each of the stator teeth 210a to 210h and output signals output from the stator wire.

Referring to Fig. 4(a), the arrangement relation between the stator teeth 210a to 210h will be described. For simplifying the explanation, Fig. 4 (a) depicts a state where the stator teeth 210a to 210h are lined up. Above Fig. 4(a), a coordinate axis for the stator teeth 210a to 210h is depicted as a coordinate axis corresponding to Fig. 4(a). This coordinate axis is the angle coordinate axis that is given when one circle of the inner circumference of the stator 200 having the stators 210a to 210h is defined as 2n (=360 degrees), and has the origin of the coordinate axis set between the stator tooth 210a and the stator tooth 210b.

As depicted in Fig. 4(a), eight stator teeth 210a to 210h are formed at equal intervals on the inner circumference of the stator 200, which means that the distance between every pair of stator teeth adjacent to each other is n/4 (=45 degrees). More specifically, when number k is assigned to each of the stator teeth 210a to 210h counterclockwise in Fig. 3A with k=1 assigned to the stator tooth 210a close to a terminal pin R1 of Fig. 3A, the first stator tooth 210a is formed at a position represented as coordinate θ=-π/8. The second stator tooth 210b is formed at a position represented as coordinate θ=π/8, the third stator tooth 210c is formed at a position represented as coordinate θ=3π/8, and the fourth stator tooth 210d is formed at a position represented as coordinate θ=5π/8. Likewise, the fifth stator tooth 210e is formed at a position represented as coordinate θ=7π/8, the sixth stator tooth 210f is formed at a position represented as coordinate θ=9π/8, the seventh stator tooth 210g is formed at a position represented as coordinate θ=11π/8, and the eight stator tooth 210h is formed at a position represented as coordinate θ=13π/8. In Fig. 4(a), each value of number k is indicated at each of the stator teeth 210a to 210h.

When a shape formed by two stator teeth adjacent to each other is referred to as slot, the first stator tooth 210a and the second stator tooth 210b form a slot 211a. In the same manner, as depicted in Fig. 4 (a), other pairs of stator teeth adjacent to each other form slots 221b to 211h. Hence slots as many as the stator teeth 210a to 210h, that is, eight slots 211a to 211h are formed. The position of the slot 211a coincides with the position of the coordinate origin.

As depicted in Fig. 3A, each of the stator teeth 210a to 210h is wound with the exciting wire 4 via each of the bobbins 410a to 410h (see Figs. 1 and 2 because the bobbins are not depicted in Figs. 3A and 3B). This exciting wire 4 is, for example, wound into a coil. Fig. 4(b) diagrammatically depicts the number of turns and the directions of winding of the exciting wire 4 wound around each of the stator teeth 210a to 210h. In Fig. 4(b), with respect to a point of reference at which the number of turns is zero, winding on the positive side represents positive winding (clockwise direction in Fig. 3A) while winding on the negative side represents negative winding (counterclockwise direction in Fig. 3A). As depicted in Fig. 4(b), the exciting wire 4 is wound around each of the stator teeth 210a to 210h such that the directions of winding at adjacent stator teeth are opposite to each other. The number of turns of the exciting wire 4 is determined to be the same at each of the stator teeth 210a to 210h.

The exciting wire 4 is wound around the stator teeth, using a dedicated winding machine. For example, the exciting wire 4 starting from the terminal pin R1 of Fig. 3A is sequentially wound around the stator tooth 210a, stator tooth 210b, stator tooth 210c, stator tooth 210d, stator tooth 210e, stator tooth 210f, stator tooth 210g, and stator tooth 210h in increasing order. The other end of the exciting wire 4 is then electrically connected to a terminal pin R2. Any two pins out of the terminal pins 471 to 476 of Figs. 1 and 2 are used as the terminal pins R1 and R2.

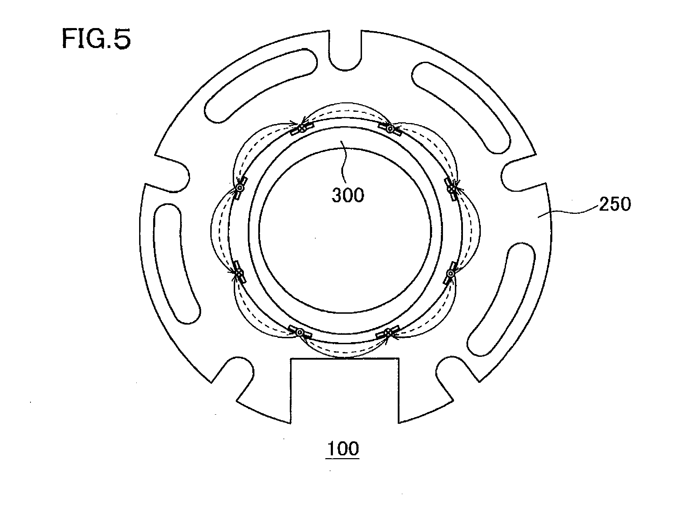

An exciting signal (e.g., AC signal with a constant frequency) is applied across the terminal pins R1 and R2, so that the exciting signal is input to the exciting wire 4. This excites each of the stator teeth 210a to 210h, which generates magnetic flux. Fig. 5 is a plan view of the resolver 100, diagrammatically depicting the direction of magnetic flux at a certain time at which the rotor 300 is in a state of rotation. Fig. 5 also diagrammatically depicts the direction of magnetic flux passing through each of the stator teeth 210a to 210h serving as a winding magnetic core. For a simpler explanation, the insulating cap 400 is omitted from Fig. 5. As described above, the exciting wire 4 is wound around each of the stator teeth 210a to 210h such that the directions of winding at adjacent stator teeth are opposite to each other. For this reason, magnetic flux passing through each of the stator teeth 210a to 210h is coupled together between stator teeth adjacent to each other. Specifically, as depicted in Fig. 5, magnetic flux is coupled together between stator teeth adjacent to each other via the plate 250 of the stator 200 (as indicated by a continuous line arrow) and via the rotor 300 (as indicated by a dotted line arrow). In other words, a magnetic circuit is created at each of the slots 211a to 211h. In this condition, when the rotor 300 rotates, the gap permeance between the rotor 300 and each of the stator teeth 210a to 210h changes. As a result, magnetic flux in the magnetic circuit of each of the slots 211a to 211h changes in correspondence to the rotation of the rotor 300. Hence a signal corresponding to magnetic flux in each magnetic circuit, that is, a signal corresponding to a rotation angle of the rotor 300 is output from the output wire wound around each of the stator teeth 210a to 210h, as an output signal.

As described above, each of the stator teeth 210a to 210h is wound with the output wire 5 that outputs an output signal corresponding to a rotation angle of the rotor 300 (see Fig. 3B). This output wire 5 consists of an output wire 51 of the sine phase and an output wire 52 of the cosine phase. Each of these output wires 51 and 52 is composed of output wires each wound around each of the stator teeth 210a to 210h, which output wires are connected in series with each other. Specifically, as depicted in Fig. 3B, the output wire 51 of the sine phase is composed of an output wire 51b wound around the second stator tooth 210b, an output wire 51d wound around the fourth stator tooth 210d, an output wire 51f wound around the sixth stator tooth 210f, and an output wire 51h wound around the eighth stator tooth 210h, the output wires 51b to 51h being connected in series with each other. The output wire 52 of the cosine phase is composed of an output wire 52a wound around the first stator tooth 210a, an output wire 52c wound around the first stator tooth 210a wound around the third stator tooth 210c, an output wire 52e wound around the fifth stator tooth 210e, and an output wire 52g wound around the seventh stator tooth 210g, the output wires 52a to 52g being connected in series with each other. Hereinafter, the output wire 51 composed of the output wires 51b, 51d, 51f, and 51h is referred to as output wire group 51. Likewise, the output wire 52 is referred to as output wire group 52, and the output wire 5 is referred to as output wire group 5.

Both output wire group 51 of the sine phase and output wire group 52 of the cosine phase are the wires that generate output signals that change sinusoidally with the rotation of the rotor 300. However, the waveforms of these output signals are different in phase from each other. Specifically, the output wire group 52 of the cosine phase outputs an output signal shifted in phase by 90 degrees to an output signal coming out of the output wire group 51 of the sine phase.

To realize the output signals coming out of the output wire groups 51 and 52 as the output signals that change sinusoidally with the rotation of the rotor 300, the number of turns and the direction of winding of the output wire wound around each of the stator teeth 210a to 210h must be adjusted. The inventors have found that if the number of turns $W(k)$ in winding at the k-th stator tooth is set by the following equation (1), an output signal $V_{osum}$ represented by the following equation (2), that is, an output signal $V_{osum}$ that changes sinusoidally in correspondence to a rotation angle $\theta$ of the rotor is output from the output wire group. The number of turns $W(k)$ of the equation (1) represents a concept including the direction of winding, according to which the positive number of turns $W(k)$ and the negative number of turns $W(k)$ indicate both directions of winding reverse to each other. A phase adjusting parameter $\Phi$ of the equation (1) is a parameter for adjusting the phase of the output signal $V_{osum}$. For example, the parameter $\Phi$ is used to adjust the position of the zero point of the output signal $V_{osum}$ or adjust the phase of each of output signals $V_{osum}$ from output wire groups of a plurality of phases.

[Eq. 7]

$$W(k) = MaxTrn \cdot (-1)^k \cdot \cos(2k\pi \cdot \frac{X}{S} + \phi) \ \text{-----} \ (1)$$

where MaxTrn denotes the maximum number of turns at each of the stator teeth;
S denotes the number of slots;
X denotes the number of poles of the rotor; and
$\Phi$ denotes the phase adjusting parameter.

[Eq. 8]

$$Vo_{sum} = \alpha \cdot \cos(X\theta - \phi - m\pi) \ \text{-----} \ (2)$$

where $\alpha = \cos(m\pi)$;

$$m = \frac{X}{S} \ ; \text{ and}$$

$\theta$ denotes a rotation angle of the rotor.

For the resolver 100 of the embodiment, the number of slots is set as S=8, the number of poles of the rotor 300 is set as X=2, and the phase adjusting parameter is set as $\Phi$=0. Substituting these values in the equation (1) gives the following equation (7) representing the number of turns $W_{sin}(k)$ of each of the output wires making up the output wire group 51 of the sin phase.
[Eq. 9]

$$W_{sin}(k) = MaxTrn \cdot (-1)^k \cdot \cos\frac{k}{2}\pi \ \text{-----} \ (7)$$

Setting the phase adjusting parameter $\Phi$='/2 gives the following equation (8) representing the number of turns $W_{cos}(k)$ of each of the output wires making up the output wire group 52 of the cosine phase.
[Eq. 10]

$$W_{cos}(k) = MaxTrn \cdot (-1)^k \cdot \cos(\frac{k}{2}\pi + \frac{\pi}{2}) \ \text{-----} \ (8)$$

Substituting values 1 to 8 for number k (k=1 to 8) in the equations (7) and (8) gives the following table 1 indicating the number of turns $W_{sin(k)}$ in winding at each of the stator teeth 210a to 210h making up the output wire group 51 of the sine phase and the number of turns $W_{cos(k)}$ in winding at each of the stator teeth 210a to 210h making up the output wire group 52 of the cosine phase. The table 1 indicates only the factors by which the maximum number of turns MaxTrn is multiplied. Fig. 4(c) is a diagrammatic view of the number of turns $W_{sin}(k)$, and Fig. 4 (e) is a diagrammatic view of the number of turns $W_{cos}(k)$.

[Table 1]

| | | K-th stator tooth | | | | | | | |
|---|---|---|---|---|---|---|---|---|---|
| | | 1 | 2 | 3 | 4 | 5 | 6 | 7 | 8 |
| Output wire | Sine phase | 0 | -1 | 0 | 1 | 0 | -1 | 0 | 1 |
| | Cosine phase | 1 | 0 | -1 | 0 | 1 | 0 | -1 | 0 |

As indicated in the table 1 and Fig. 4(c), to form the output wire group 51 of the sine phase, the output wire is wound around the second stator tooth 210b by the number of turns MaxTrn in the negative direction (counterclockwise direction shown in Fig. 3B, which hereinafter means "negative direction"), around the fourth stator tooth 210d by the number of turns MaxTrn in the positive direction (clockwise direction shown in Fig. 3B, which hereinafter means "positive direction"), around the sixth stator tooth 210f by the number of turns MaxTrn in the negative direction, and around the eighth stator tooth 210h by the number of turns MaxTrn in the positive direction. Hence, as described above, the output wire group 51 of the sine phase is composed of the output wire 51b, the output wire 51d, the output wire 51f, and the output wire 51h that are connected in series with each other (see Fig. 3B).

This output wire group 51 of the sine phase is wound using the dedicated winding machine. For example, the output wire group 51 starting from a terminal pin S2 of Fig. 3B is sequentially wound around the stator tooth 210b, stator tooth 210d, stator tooth 210f, and stator tooth 210h in increasing order. The other end of the output wire group 51 is then electrically connected to a terminal pin S4. Any two pins out of the terminal pins 471 to 476 of Figs. 1 and 2 are used as the terminal pins S2 and S4.

As indicated in the table 1 and Fig. 4(e), to form the output wire group 52 of the cosine phase, the output wire is wound around the first stator tooth 210a by the number of turns MaxTrn in the positive direction, around the third stator tooth 210c by the number of turns MaxTrn in the negative direction, around the fifth stator tooth 210e by the number of turns MaxTrn in the positive direction, and around the seventh stator tooth 210g by the number of turns MaxTrn in the negative direction. Hence, as described above, the output wire group 52 of the cosine phase is composed of the output wire 52a, the output wire 52c, the output wire 52e, and the output wire 52g that are connected in series with each other (see Fig. 3B).

This output wire group 52 of the cosine phase is wound using the dedicated winding machine. For example, the output wire group 52 starting from a terminal pin S1 of Fig. 3B is sequentially wound around the stator tooth 210a, stator tooth 210c, stator tooth 210e, and stator tooth 210g in increasing order. The other end of the output wire group 52 is then electrically connected to a terminal pin S3. Any two pins out of the terminal pins 471 to 476 of Figs. 1 and 2 are used as the terminal pins S1 and S3.

By configuring the output wire groups 51 and 52 in this manner, an output signal $V_{osum1}$ from the output wire group 51 is extracted from the terminal pins S2 and S4 and an output signal $V_{osum2}$ from the output wire group 52 is extracted from the terminals pins S1 and S3. In this case, when the number of slots S=8, the number of poles X of the rotor 300=2, and the phase adjusting parameter Φ=0 are given to the equation (2), a sine-wave signal represented by the following equation (9) is obtained as the output signal $Vo_{sum1}$ from the output wire group 51. In the same manner, when the number of slots S=8, the number of poles X of the rotor 300=2, and the phase adjusting parameter Φ=π/2 are given to the equation (2), a cosine-wave signal represented by the following equation (10) is obtained as the output signal $V_{osum2}$ from the output wire group 52.

[Eq. 11]

$$Vo_{sum}1 = \alpha \cdot \cos(2\theta - \frac{\pi}{4}) \quad ----- (9)$$

[Eq. 12]

$$Vo_{sum}2 = \alpha \cdot \cos(2\theta + \frac{\pi}{4}) \quad ----- (10)$$

When the output signal $V_{osum1}$ of the equation (9) is plotted against the coordinate axis θ of Fig. 4, a waveform of Fig. 4(d) is obtained. Likewise, when the output signal $V_{osum2}$ of the equation (10) is plotted against the coordinate axis θ of Fig. 4, a waveform of Fig. 4(f) is obtained. In practice, a signal created by superposing output signals from output wires each wound around each of the stator teeth 210a to 210h is output as the output signal $V_{osum1}$ and as the output signal $V_{osum2}$. Specifically, in the case of the output wire group 51, output wires are wound around the second, fourth, sixth, and eighth stator teeth 210b, 210d, 210f, and 210h, from which output signals come out and are superposed together to generate the signal having the waveform of Fig. 4(d).

In the case of the output wire group 52, output wires are wound around the first, third, fifth, and seventh stator teeth 210a, 210c, 210e, and 210g, from which output signals come out and are superposed together to generate the signal having the waveform of Fig. 4(f).

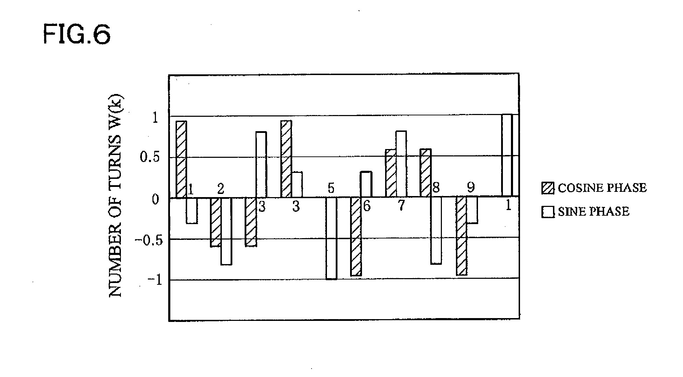

According to the resolver 100 of the embodiment, the number of turns W(k) in winding at each of the stator teeth 210a to 210h is determined to be a value without fractions (see the table 1). When a resolver different from the resolver 100 in the number of slots S, etc., is used, however, a distribution of the number of turns W(k) becomes different from that indicated in the table 1. It is assumed, for example, that a resolver with the number of slots (stator teeth) S=10 and the number of poles of the rotor X=2 is used. In this case, if S=10, X=2, and $\Phi=0$ (in the case of the sine phase) and n/2 (in the case of the cosine phase) are given to the equation (1) to calculate the number of turns W(k) in winding at each of the stator teeth, the following table 2 results. Fig. 6 is a graph diagrammatically showing a distribution of the calculated number of turns W(k). The table 2 indicates only the factors by which the maximum number of turns MaxTrn is multiplied. The table 2 indicates the factors up to their two decimal places.

[Table 2]

| | | K-th stator tooth | | | | | | | | | |
|---|---|---|---|---|---|---|---|---|---|---|---|
| | | 1 | 2 | 3 | 4 | 5 | 6 | 7 | 8 | 9 | 10 |
| Output wire | Sine phase | -0.31 | -0.81 | +0.81 | +0.31 | -1.0 | +0.31 | +0.81 | -0.81 | -0.31 | +1.0 |
| | Cosine phase | +0.95 | -0.59 | -0.59 | +0.95 | 0 | -0.95 | +0.59 | +0.59 | -0.95 | 0 |

As depicted in the table 2 and Fig. 6, a complicated distribution of the number of turns W (k) results depending on a resolver to use. Even in such a case, winding the output wire around each of the stator teeth by the number of turns W(k) indicated in the table 2 leads to output of the sinusoidally changing output signal $V_{osum}$ represented by the equation (2).

In the table 2, the maximum number of turns $W_{SMAX}$ of the number of turns $W_{sin}(k)$ set for the output wire group of the sine phase is indicated as "1.0" while the maximum number of turns $W_{CMAX}$ of the number of turns $W_{cos}(k)$ set for the output wire group of the cosine phase is indicated as "0.95". This is because that the value of number k substituted in the equation (1) is an integer. A difference between the maximum number of turns $W_{SMAX}$ and the maximum number of turns $W_{CMAX}$ results in an error of the relation between the output signal $V_{osum1}$ and the output signal $V_{osum2}$. In such a case, the number of turns $W_{cos}(k)$ for the cosine phase is corrected, using the following equations (5) and (6), so that the maximum number of turns $W_{SMAX}$ matches the maximum number of turns $W_{CMAX}$. Specifically, a correction factor Wc is determined by the equation (5), and the number of turns $W_{cos}(k)$ for the cosine phase is multiplied by the correction factor Wc to correct the number of turns $W_{cos}(k)$. This prevents the occurrence of the above error. While the number of turns $W_{cos}(k)$ for the cosine phase is corrected using the equations (5) and (6), the number of turns $W_{sin}(k)$ for the sine phase may be corrected or both of the number of turns $W_{cos}(k)$ for the cosine phase and the number of turns $W_{sin}(k)$ for the sine phase may be corrected.

[Eq. 13]

$$Wc = cosMaxTrn/sinMaxTrn \ ----- (5)$$

$$W'_{cos}(k) = Wc \cdot W_{cos}(k) \qquad ----- (6)$$

A fact that winding by the number of turns W (k) set by the equation (1) leads to output of the output signal $V_{osum}$ of the equation (2) will be explained theoretically. In the following explanation, k denotes a number for a stator tooth, S denotes the number of slots, X denotes the number of poles of the rotor, $\theta$ denotes a rotation angle of the rotor, and $\Phi$ denotes the phase adjusting parameter, as in the above description.

(Vector potential generated by the exciting wire)

It is assumed that the exciting wire is wound around each of the stator teeth so that the direction of exciting wire current becomes negative at slots in odd places of order and becomes positive at slots in even places of order. In this case, the vector potential $Az_{Left}(k)$ of a slot on the left (in the counterclockwise direction) of the k-th stator tooth is represented by the following equation (11), where $(-1)^k$ is a term added to the equation for adjusting its sign in such a way that k as an odd number gives $(-1)^k = -1$ while k as an even number gives $(-1)^k = 1$.
[Eq. 14]

$$Az_{Left}(k) = (-1)^k \cdot \cos(2k\frac{X}{S}\pi + X\theta) \quad -----(11)$$

The vector potential $Az_{Right}(k)$ of a slot on the right (in the clockwise direction) of the k-th stator tooth is represented by the following equation (12), where $(-1)^{k-1}$ is a term added to the equation for adjusting its sign.
[Eq. 15]

$$Az_{Right}(k) = (-1)^{k-1} \cdot \cos\{2(k-1)\frac{X}{S}\pi + X\theta\} \quad -----(12)$$

These vector potentials $Az_{Left}(k)$ and $Az_{Right}(k)$ are equivalent to magnetic flux that is generated at each of the stator teeth by the exciting wire to which an exciting signal is input.

(Output signal at the k-th stator tooth)

When the number of turns of the output wire wound around the k-th stator tooth is W(k) and the length of the output wire in the Z direction (direction of the length of the stator tooth) is Wlen, an output voltage (output signal) Vo (k) from the output wire is represented by the following equation (13).
[Eq. 16]

$$Vo(k) = Wlen \cdot W(k) \cdot \{Az_{Left}(k) - Az_{Right}(k)\} \quad -----(13)$$

(Demonstration of the equation (2) to be obtained)

It is demonstrated that when the output wire is wound around the k-th stator tooth by the number of turns W(k) of the equation (1), the output signal $V_{osum}$ of the equation (2) is output. Letting the output wire length Wlen defined in the equation (13) be 1 merely changes the amplitude of a sine wave as an output signal and does not affect the intended demonstration. Now setting Wlen=1 and substituting $Az_{Left}(k)$ of the equation (11), $Az_{Right}(k)$ of the equation (12), and W(k) of the equation (1) in the above equation (13) yields the following equation (14).
[Eq. 17]

$$Vo(k) = (-1)^k \cdot \cos(2k\frac{X}{S}\pi + \phi) \cdot [(-1)^k \cdot \cos(2k\frac{X}{S}\pi + X\theta) \\ (-1)^{k-1} \cdot \cos\{2(k-1)\frac{X}{S}\pi + X\theta\}] \quad -----(14)$$

In the equation (14), X/S is replaced with m. Since $(-1)^{k-1} = -(-1)^k$, the following equation (15) is derived from the equation (14).
[Eq. 18]

$$Vo(k) \\ = (-1)^k \cdot \cos(2km\pi + \phi) \cdot [(-1)^k \cdot \cos(2km\pi + X\theta) + (-1)^k \cos\{2(k-1)m\pi + X\theta\}] \\ = (-1)^{2k} \cdot \cos(2km\pi + \phi) \cdot [\cos(2km\pi + X\theta) + \cos\{2(k-1)m\pi + X\theta\}] \quad -----(15)$$

Since k denotes an integer, $(-1)^{2k} = 1$ holds. The following equation (16) is thus derived from the equation (15).
[Eq. 19]

$$Vo(k) = \cos(2km\pi + \phi) \cdot [\cos(2km\pi + X\theta) + \cos\{2(k-1)m\pi + X\theta\}] \quad \text{-----} (16)$$

Terms in [ ] of the equation (16) can be transformed into the following equation (17) using the formulae of sums to products of trigonometric function.
[Eq. 20]

$$\cos(2km\pi + X\theta) + \cos\{2(k-1)m\pi + X\theta\}$$
$$= 2\cos\left(\frac{2km\pi + X\theta + 2(k-1)m\pi + X\theta}{2}\right) \cdot \cos\left(\frac{2km\pi + X\theta - 2(k-1)m\pi - X\theta}{2}\right)$$
$$= 2\cos\left(\frac{4km\pi + 2X\theta - 2m\pi}{2}\right) \cdot \cos\left(\frac{2m\pi}{2}\right)$$
$$= 2\cos(2km\pi - m\pi + X\theta) \cdot \cos(m\pi)$$
$$= 2\alpha\cos(2km\pi - m\pi + X\theta) \quad \text{-----} (17)$$
$$\text{Where } \alpha = \cos(m\pi)$$

From the equations (16) and (17), therefore, the following equation (18) is derived.
[Eq. 21]

$$Vo(k) = 2\alpha \cdot \cos(2km\pi + \phi) \cdot \cos(2km\pi - m\pi + X\theta) \quad \text{-----} (18)$$

Transforming the product of the second and third terms of the equation (18) into the sum of the same using the formulae of products to sums of trigonometric function yields the following equation (19).
[Eq. 22]

$$\cos(2km\pi + \phi) \cdot \cos(2km\pi - m\pi + X\theta)$$
$$= \frac{1}{2}\{\cos(2km\pi + \phi + 2km\pi - m\pi + X\theta) + \cos(2km\pi + \phi - 2km\pi + m\pi - X\theta)\}$$
$$= \frac{1}{2}\{\cos(4km\pi - m\pi + \phi + X\theta) + \cos(m\pi + \phi - X\theta)\} \quad \text{-----} (19)$$

From the equations (18) and (19), therefore, the following equation (20) is derived.
[Eq. 23]

$$Vo(k) = \alpha \cdot \{\cos(4km\pi - m\pi + X\theta + \phi) + \cos(-m\pi + X\theta - \phi)\} \quad \text{-----} (20)$$

As indicated by the following equation (21), the value of k is changed from 1 to S in the equation (20) representing the output signal Vo (k) and resulting values of the output signal Vo(k) are summed up to produce the output voltage (output signal) $V_{osum}$, which is generated when output wires each wound around each of the stator teeth are connected in series with each other.
[Eq. 24]

$$Vo_{sum} = \alpha \cdot \sum_{k=1}^{s} \cos(4km\pi - m\pi + X\theta + \phi) + \alpha \cdot \cos(-m\pi + X\theta - \phi) \quad \text{-----} (21)$$

When k denotes each of positive numbers ranging from 1 to S and S denotes an even number, the first term ($\Sigma$ term) of the equation (21) is 0, as indicated by the following equation (22). (This will be demonstrated later.)
[Eq. 25]

$$\sum_{k=1}^{s} \cos(4km\pi - m\pi + X\theta + \phi) = 0 \quad ----- (22)$$

From the equations (21) and (22), therefore, the following equation (23), i.e., the equation (2) is derived. In the equation (23), m=X/S, $\alpha$=cos(m$\pi$), and $\Phi$ each represent a constant. The output signal $V_{osum}$ is, therefore, a function of a rotation angle $\theta$ of the rotor, to which function the value of k is irrelevant.
[Eq. 26]

$$Vo_{sum} = \alpha \cdot \cos(X\theta - \phi - m\pi) \quad ----- (23)$$

In a case of a resolver with a combination of the number of poles of the rotor X and the number of slots S that gives m=0.5, $\alpha$=cos(m$\pi$)=0 results. It follows then that $V_{osum}$ of the equation (2) is 0. The equation (2), therefore, indicates that the resolver with the combination of the number of poles of the rotor X and the number of slots S that gives m=0.5 cannot be put in practical use.

(Demonstration of the equation (22))

It is demonstrated that the equation (22) results when k denotes each of positive numbers ranging from 1 to S and S denotes an even number. For the demonstration, the following equation (24) is defined.
[Eq. 27]

$$\beta = \cos(4km\pi - m\pi + X\theta + \phi) \quad ----- (24)$$

$\beta$ of the equation (24) is expanded to a complex number. Specifically, $\beta$ of the equation (24) is considered to be a real number part of a complex number, and an imaginary number part i·sin (4km$\pi$-m$\pi$+X$\theta$+$\Phi$) is added to the equation (24). Hence the following equation (25) is obtained.
[Eq. 28]

$$\beta_i = \cos(4km\pi - m\pi + X\theta + \phi) + i \cdot \sin(4km\pi - m\pi + X\theta + \phi) \quad ----- (25)$$

A term 4kmn that changes as a result of a change of k in the equation (25) can be transformed into the following equation (26).
[Eq. 29]

$$4km\pi = k \cdot \frac{X}{\frac{s}{2}} \cdot 2\pi \quad ----- (26)$$

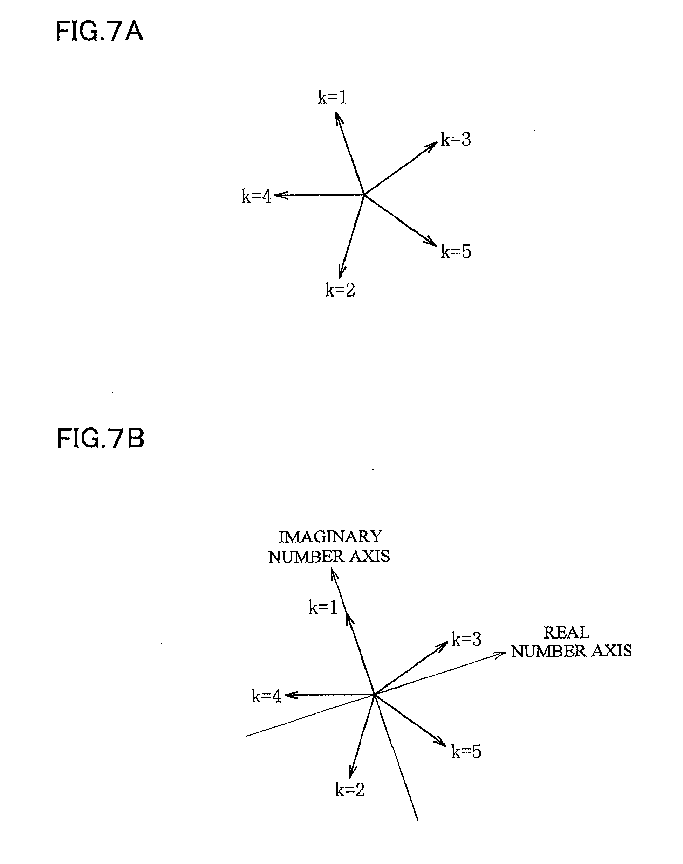

Since S denotes a positive number, a change of k from 1 to S/2 results in an increase of 4kmn from 4mn to X·2$\pi$ in increments of 2X·2$\pi$/S in the equation (26). The value of 4kmn when k changes from S/2+1 to S is the same as the value of 4kmn when k changes from 1 to S/2. For this reason, when k changes from 1 to S, straight lines connecting $\beta$i of the equation (25) to the coordinate origin (0, 0) are expressed as S/2 vectors of 1 in length with every pair of adjacent vectors equally making an angle of 2X·2$\pi$/S. For these S/2 vectors of 1 in length, a rotational coordinate with an imaginary number axis serving as an axis of symmetry exists. In this rotational coordinate, $\Sigma\beta$, which is a real number part of $\Sigma\beta$i, is 0. Hence the equation (22) holds.
A vector diagram of $\beta$i in a case of S=10 and X=2 is shown as Fig. 7A, which is a specific example of the above explanation. When a coordinate system as depicted in Fig. 7B is plotted against Fig. 7A, it is understood that the sum of real number parts (cosine component) of vectors for k=1 to 5 is zero. When the coordinate system of Fig. 7B is rotated by n/2, it is understood that the sum of imaginary number parts (sine component) of the vectors for k=1 to 5 is zero.
As described above, according to the resolver 100 of the embodiment, the output wire is wound around each of the stator teeth 210a to 210h by the number of turns set by the equation (1). As a result, an output signal is obtained as the signal represented by the equation (2) that changes sinusoidally in correspondence to a rotation angle of the rotor 300. The equation (1) of the invention is not a fractional equation and is composed of fewer terms. Hence the number of turns can be set more easily than a conventional case. Because the equation (1) is not a fractional equation, the number of turns is hardly set as a fraction, so that a highly precise output signal is obtained.

(Modification)

While the equation (1) representing the number of turns of the output wire of the embodiment is expressed as a cosine function, the output wire may be wound by the number of turns set by the following equation (3) expressed as a sine function. The inventors have found that in the case of the equation (3), a sinusoidally changing output signal represented by the following equation (4) is obtained.
[Eq. 30]

$$W(k) = MaxTrn \cdot (-1)^k \cdot \sin(2k\pi \cdot \frac{X}{S} + \phi) \ \text{-----} (3)$$

where MaxTrn denotes the maximum number of turns at each of the stator teeth;
S denotes the number of slots;
X denotes the number of poles of the rotor; and
Φ denotes the phase adjusting parameter.

[Eq. 31]

$$Vo_{sum} = \alpha \cdot \sin(m\pi + \phi - X\theta) \ \text{-----} (4)$$

where $\alpha = \cos(m\pi)$;

$$m = \frac{X}{S} \ \text{; and}$$

$\theta$ denotes a rotation angle of the rotor.

It is demonstrated theoretically that winding by the number of turns W(k) set by the following equation (3) results in output of the output signal $V_{osum}$ of the equation (4).

(Vector potential generated by the exciting wire)

It is assumed that the exciting wire is wound around each of the stator teeth so that the direction of exciting wire current becomes negative at slots in odd places of order and becomes positive at slots in even places of order. In this case, the vector potential $Az_{Left}(k)$ of a slot on the left (in the counterclockwise direction) of the k-th stator tooth is represented by the following equation (27), where $(-1)^k$ is a term added to the equation for adjusting its sign in such a way that k as an odd number gives $(-1)^k = -1$ while k as an even number gives $(-1)^k = 1$.
[Eq. 32]

$$Az_{Left}(k) = (-1)^k \cdot \sin(2k\frac{X}{S}\pi + X\theta) \ \text{-----} (27)$$

The vector potential $Az_{Right}(k)$ of a slot on the right (in the clockwise direction) of the k-th stator tooth is represented by the following equation (28), where $(-1)^{k-1}$ is a term added to the equation for adjusting its sign.
[Eq. 33]

$$Az_{Right}(k) = (-1)^{k-1} \cdot \sin\{2(k-1)\frac{X}{S}\pi + X\theta\} \ \text{-----} (28)$$

These vector potentials $Az_{Left}(k)$ and $Az_{Right}(k)$ are equivalent to magnetic flux that is generated at each of the stator teeth by the exciting wire to which an exciting signal is input.

(Output signal at the k-th stator tooth)

When the number of turns of the output wire wound around the k-th stator tooth is W(k) and the length of the output wire in the Z direction (direction of the length of the stator tooth) is Wlen, an output voltage (output signal) Vo (k) from the output wire is represented by the following equation (29).
[Eq. 34]

$$Vo(k) = Wlen \cdot W(k) \cdot \{ Az_{Left}(k) - Az_{Right}(k) \} \quad ----- (29)$$

(Demonstration of the equation (2) to be obtained)

It is demonstrated that when the output wire is wound around the k-th stator tooth by the number of turns W(k) of the equation (3), the output signal $V_{osum}$ of the equation (4) is output. Letting the output wire length Wlen defined in the equation (29) be 1 merely changes the amplitude of a sine wave as an output signal and does not affect the intended demonstration. Now setting Wlen=1 and substituting $Az_{Left}(k)$ of the equation (27), $Az_{Right}(k)$ of the equation (28), and W(k) of the equation (3) in the above equation (29) yields the following equation (30).
[Eq. 35]

$$Vo(k) = (-1)^k \cdot \sin(2k \frac{X}{S} \pi + \phi) \cdot [(-1)^k \cdot \sin(2k \frac{X}{S}\pi + X\theta)$$
$$-(-1)^{k-1} \cdot \sin\{2(k-1\frac{X}{S}\pi + X\theta\}] \quad ----- (30)$$

In the equation (30), X/S is replaced with m. Since $(-1)^{k-1}=-(-1)^k$, the following equation (31) is derived from the equation (30).
[Eq. 36]

$$Vo(k)$$
$$= (-1)^k \cdot \sin(2km\pi + \phi) \cdot [(-1)^k \cdot \sin(2km\pi + X\theta) + (-1)^k \cdot \sin\{2(k-1)m\pi + X\theta\}]$$
$$= (-1)^{2k} \cdot \sin(2km\pi + \phi) \cdot [\sin(2km\pi + X\theta) + \sin\{2(k-1)m\pi + X\theta\}] \quad ----- (31)$$

Since k denotes an integer, $(-1)^{2k}=1$ holds. The following equation (32) is thus derived from the equation (31).
[Eq. 37]

$$Vo(k) = \sin(2km\pi + \phi) \cdot [\sin(2km\pi + X\theta) + \sin\{2(k-1)m\pi + X\theta\}] \quad ----- (32)$$

Terms in [ ] of the equation (32) can be transformed into the following equation (33) using the formulae of sums to products of trigonometric function.
[Eq. 38]

$$\sin(2km\pi + X\theta) + \sin\{2(k-1)m\pi + X\theta\}$$

$$= 2\sin\left(\frac{2km\pi + X\theta + 2(k-1)m\pi + X\theta}{2}\right) \cdot \cos\left(\frac{2km\pi + X\theta - 2(k-1)m\pi - X\theta}{2}\right)$$

$$= 2\sin\left(\frac{4km\pi + 2X\theta - 2m\pi}{2}\right) \cdot \cos\left(\frac{2m\pi}{2}\right)$$

$$= 2\sin(2km\pi - m\pi + X\theta) \cdot \cos(m\pi)$$

$$= 2\alpha\sin(2km\pi - m\pi + X\theta) \quad\quad ----- (33)$$

$$\text{Where } \alpha = \cos(m\pi)$$

From the equations (32) and (33), therefore, the following equation (34) is derived.
[Eq. 39]

$$V_O(k) = 2\alpha \cdot \sin(2km\pi + \phi) \cdot \sin(2km\pi - m\pi + X\theta) \quad ----- (34)$$

Transforming the product of the second and third terms of the equation (34) into the sum of the same using the formulae of products to sums of trigonometric function yields the following equation (35).
[Eq. 40]

$$\sin(2km\pi + \phi) \cdot \sin(2km\pi - m\pi + X\theta)$$

$$= \frac{1}{2}\{\sin(2km\pi + \phi + 2km\pi - m\pi + X\theta) + \sin(2km\pi + \phi - 2km\pi + m\pi - X\theta)\}$$

$$= \frac{1}{2}\{\sin(4km\pi - m\pi + \phi + X\theta) + \sin(m\pi + \phi - X\theta)\} \quad ----- (35)$$

From the equations (34) and (35), therefore, the following equation (36) is derived.
[Eq. 41]

$$V_O(k) = \alpha \cdot \{\sin(4km\pi - m\pi + \phi + X\theta) + \sin(m\pi + \phi - X\theta)\} \quad\quad ----- (36)$$

As indicated by the following equation (37), the value of k is changed from 1 to S in the equation (36) representing the output signal Vo (k) and resulting values of the output signal Vo(k) are summed up to produce the output voltage (output signal) $V_{osum}$, which is generated when output wires each wound around each of the stator teeth are connected in series with each other.
[Eq. 42]

$$V_{O\,sum} = \alpha \cdot \sum_{k=1}^{s} \sin(4km\pi - m\pi + \phi + X\theta) + \alpha \cdot \sin(m\pi + \phi - X\theta) \quad ----- (37)$$

When k denotes each of positive numbers ranging from 1 to S and S denotes an even number, the first term ($\Sigma$ term) of the equation (37) is 0, as indicated by the following equation (38). (This will be demonstrated later.)
[Eq. 43]

$$\sum_{k=1}^{s} \sin(4km\pi - m\pi + \phi + X\theta) = 0 \quad ----- (38)$$

Hence, from the equations (37) and (38), the following equation (39), i.e., the equation (4) is derived. In the equation (39), m=X/S, $\alpha=\cos(m\pi)$, and $\Phi$ each represent a constant. The output signal $V_{osum}$ is, therefore, a function of a rotation angle θ of the rotor, to which function the value of k is irrelevant.
[Eq. 44]

$$\mathrm{Vo}_{sum} = \alpha \cdot \sin(m\pi + \phi - X\theta) \quad ----- (39)$$

In a case of a resolver with a combination of the number of poles of the rotor X and the number of slots S that gives m=0.5, $\alpha$=cos(m$\pi$)=0 results. It follows then that $V_{osum}$ of the equation (4) is 0. The equation (4), therefore, indicates that the resolver with the combination of the number of poles of the rotor X and the number of slots S that gives m=0.5 cannot be put in practical use.

(Demonstration of the equation (38))

It is demonstrated that the equation (38) results when k denotes each of positive numbers ranging from 1 to S and S denotes an even number. For the demonstration, the following equation (40) is defined.
[Eq. 45]

$$\beta = \sin(4km\pi - m\pi + \phi + X\theta) \quad ----- (40)$$

$\beta$ of the equation (40) is expanded to a complex number. Specifically, $\beta$ of the equation (40) is considered to be an imaginary number part of a complex number, and a real number part cos (4km$\pi$-m$\pi$+X$\theta$+$\Phi$) is added to the equation (40). Hence the following equation (41) is obtained.
[Eq. 46]

$$\beta_i = \cos(4km\pi - m\pi + X\theta + \phi) + i \cdot \sin(4km\pi - m\pi + X\theta + \phi) \quad ----- (41)$$

A term 4kmπ that changes as a result of a change of k in the equation (41) can be transformed into the following equation (42).
[Eq. 47]

$$4km\pi = k \cdot \frac{X}{\frac{S}{2}} \cdot 2\pi \quad ----- (42)$$

Since S denotes a positive even number, a change of k from 1 to S/2 results in an increase of 4kmπ from 4mπ to X·2π in increments of 2X·2π/S in the equation (42). The value of 4kmn when k changes from S/2+1 to S is the same as the value of 4kmn when k changes from 1 to S/2. For this reason, when k changes from 1 to S, straight lines connecting βi of the equation (41) to the coordinate origin (0, 0) are expressed as S/2 vectors of 1 in length with every pair of adjacent vectors equally making an angle of 2X·2π/S. For these S/2 vectors of 1 in length, a rotational coordinate with a real number axis serving as an axis of symmetry exists. In this rotational coordinate, Σβ, which is an imaginary number part of Σβi, is 0. Hence the equation (38) holds.

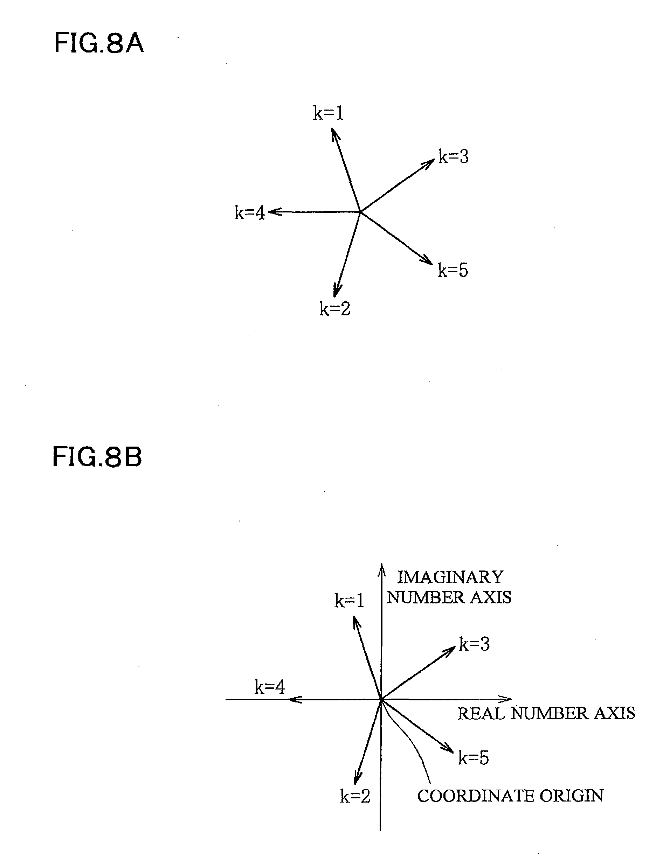

A vector diagram of βi in a case of S=10 and X=2 is shown as Fig. 8A, which is a specific example of the above explanation. When a coordinate system as depicted in Fig. 8B is plotted against Fig. 8A, it is understood that the sum of imaginary number parts (sine component) of vectors for k=1 to 5 is zero. When the coordinate system of Fig. 8B is rotated by n/2, it is understood that the sum of real number parts (cosine component) of the vectors for k=1 to 5 is also zero.

In this manner, the sinusoidally changing output signal represented by the equation (4) can be obtained based on the equation (3). Similar to the equation (1), the equation (3) is not a fractional equation and is composed of fewer terms. Hence the number of turns can be set more easily than a conventional case.

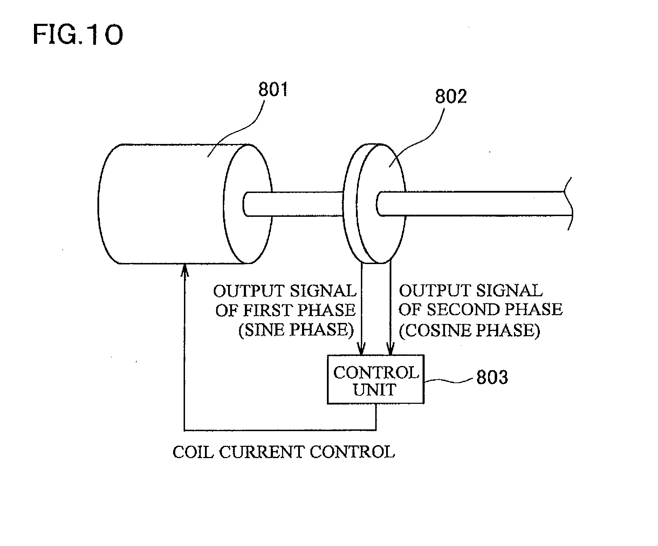

Examples of use of a resolver will then be described. Fig. 10 depicts a working example where a resolver is applied to control over a brushless motor. In the example of Fig. 10, a resolver 802 (rotor of the resolver) is set coaxial with the rotating shaft of a brushless motor 801 and detects a rotation angle of the brushless motor 802. An output signal of a first phase (sine-wave signal) and an output signal of a second phase (cosine-wave signal), both output signals indicating a rotation angle detected by the resolver 802, are transmitted to a control unit 803 that controls the brushless motor 801. Based on the incoming first and second output signals of first and second phases, the control unit 803 grasps the current rotation angle of the brushless motor 801. The control unit 803 then switches the direction of a coil current flowing through the brushless motor 801 in correspondence to the rotation angle to bring the brushless motor 801 in desired rotation under control by the control unit 803.

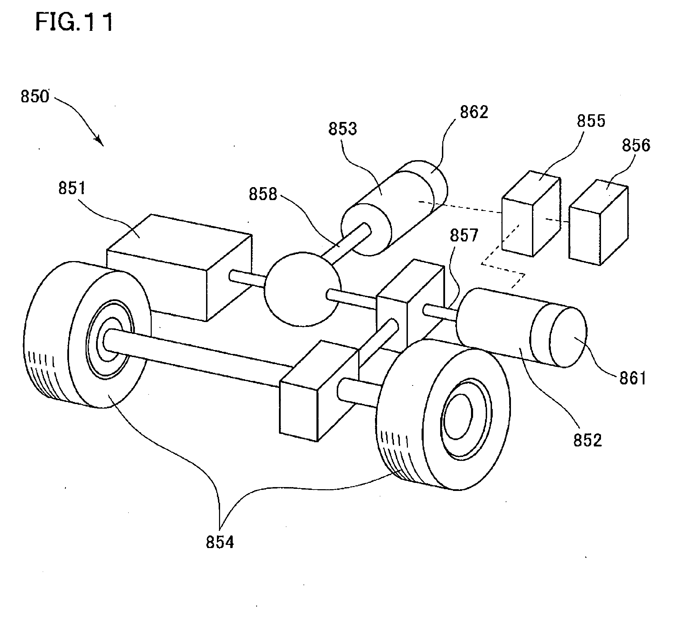

Fig. 11 depicts a working example where a resolver is applied to control over a hybrid car. A hybrid engine system 850 depicted in Fig. 11 includes an engine 851, a motor 852, a generator 853, wheels 854, an inverter 855, and a battery 856. According to the hybrid engine system 850, the wheels 854 are driven to rotate by the engine 851 and also by the motor 852. The battery 856 is connected to the motor 852 via the inverter 855, so that the motor 852 is supplied with power from the battery 856 to drive and rotate a drive shaft 857. The generator 853 generates power as a result of rotation of a rotating shaft 858, sending the generated power to the battery 856 via the inverter 855 to charge the battery 856. The drive shaft 857 of the motor 852 and the rotating shaft 858 of the generator 853 are equipped with resolvers 861 and 862, respectively. The resolver 861 detects a rotation position of the drive shaft 857 of the motor 852 and transmits information of the rotation position to a control unit (not depicted). The resolver 862 detects a rotation position of the rotating shaft 858 of the generator 853 and transmits information of the rotation position to the control unit. Based on the rotation positions information sent from the resolvers 861 and 862, the control unit controls the rotation of the motor 852 and the generator 853. As a result, when the hybrid car travels at low speed, for example, the wheels 854 are driven only by the motor 852. In other situations, the wheels 854 are driven by both engine 851 and motor 852. When the car is decelerated, the rotating shaft 858 of the generator 853 is rotated to reduce the speed of the car. This rotation of the rotating shaft 858 causes the generator 853 to generate power, with which the battery 856 is charged.

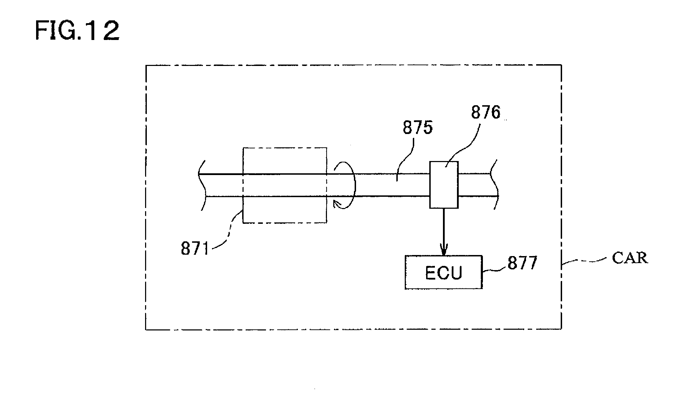

Fig. 12 depicts a working example where a resolver is applied to control over the engine of a car. In the example of Fig. 12, a resolver 876 is disposed on an output shaft 875 of an engine 871 and detects a rotation position of the output shaft 875. Information of the rotation position of the output shaft 875 detected by the resolver 876 is transmitted to an ECU 877 that controls the engine 871. Based on information of the rotation position transmitted by the resolver 876, the ECU 877 calculates the revolution speed of the output shaft 875, i.e., the number of revolutions of the engine. The ECU 877 then controls the engine 871 based on the calculated number of revolutions of the engine. As a result, in a case where the resolver is applied to control over the engine of a hybrid car, the number of revolutions of the engine is kept low to let the motor alone drive the wheels when the hybrid car travels at low speed. In this manner, the resolver is capable of obtaining a highly precise detection signal even if applied to a unit under a severe environment, such as an engine, and is, therefore, preferable.

The winding method of winding for the rotation angle detecting or synchronizing apparatus according to the invention is not limited to the embodiment described above, but may be embodied as various modifications on the premise that modifications do not deviate from the gist of claims. For example, while the above embodiment is explained as the case where the invention is applied to the resolver having the stator teeth erected against the stator plate, the invention may also be applied to a resolver having stator teeth formed to face inward in the radial direction of a stator, which resolver is the same in type as the conventional resolver of Fig. 9.

While the above embodiment is explained as the case where the invention is applied to the resolver having the rotor disposed inside the stator teeth, the invention may also be applied to an outer-rotor-type resolver having a stator disposed outside stator teeth.

While the above embodiment is explained as the case where the invention is applied to the resolver having the output wire groups of two phases wound around the stator teeth, the invention may also be applied to a different type of rotation angle detecting apparatus having output wire groups of n phases wound around stator teeth. The invention is applied not only to the rotation angle detecting apparatus but also to a rotation angle synchronizing apparatus. For example, the invention may also be applied to a synchro having output wire groups of three phases that are wound to generate output signals of three phases.

This synchro is the same as the resolver in that the synchro has a stator, a rotor, and an output wire group wound around the stator teeth and that the output wire group outputs a sine-wave signal that changes with the rotation of the rotor. In the synchro, therefore, the number of turns of the output wire wound around each of the stator teeth is set so that a sine-wave signal is output from the output wire group. The synchro is, however, different from the resolver in that the output wire groups of three phases are wound around the stator teeth and that output signals output from the output wire groups are shifted in phase to each other by 120 degrees.

The synchro is usually composed of a transmission-side synchro and a reception-side synchro. One of the transmission-side and reception-side synchros is referred to as "synchro" and both of them are also collectively referred to as "synchro". The transmission-side and reception-side synchros are of the same structure. Strictly speaking, however, the transmission-side synchro outputs a sine-wave signal corresponding to a rotation angle of the rotor, while the reception-side synchro receives the output signal from the transmission-side synchro and copies the received signal to create an output signal (which is, in other words, taken to be the output signal generated by the reception-side synchro).

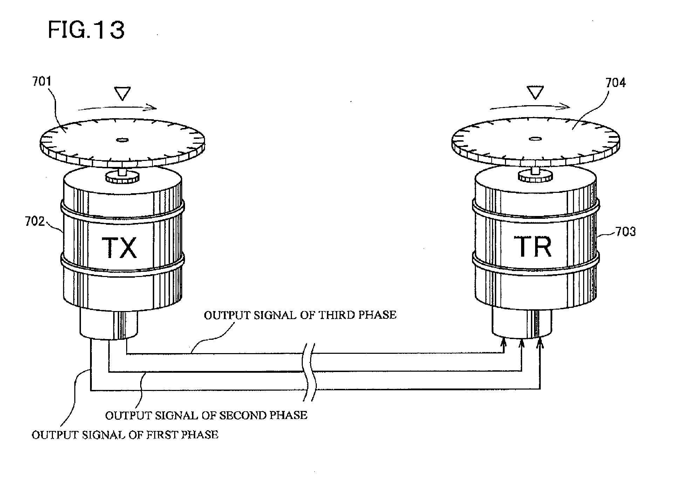

Fig. 13 depicts an example of use of a synchro. As depicted in Fig. 13, the synchro is used to synchronize a plurality of devices in their operations, and usually serves as a set of synchro transmitter and a synchro receiver. Specifically, as depicted in Fig. 13, a synchro transmitter 702 working as a synchro is disposed so that a rotating shaft 701 of the synchro transmitter 702 rotates by following the operation of one device (transmission-side device, which is not depicted). The synchro transmitter 702 outputs output signals of first to third phases (sine-wave signals) that change in correspondence to a rotation angle of the device connected to the synchro transmitter 702. In the same manner, the synchro receiver 703 working as a synchro is disposed so that a rotating shaft 704 of the synchro receiver 703 rotates by following the operation of another device (reception-side device, which is not depicted). The synchro receiver 703 outputs output signals of first to third phases (sine-wave signals) that change in correspondence to a rotation angle of the device connected to the synchro receiver 703. The synchro transmitter 702 is connected to the synchro receiver 703 through phase-to-phase connection. These synchro transmitter and synchro receiver operate in the following manner. (1) When the position of the rotor of the synchro transmitter 702 is different from the same of the synchro receiver 703, a potential difference arises between both rotors, which causes current of each phase to flow. (2) This current causes the rotor of the synchro receiver 703 to rotate, which means a torque is generated. (3) As the rotor (rotating shaft 704) of the synchro receiver 703 rotates, the reception-side device connected to the rotor rotates. (4) When the position of the rotor of the synchro receiver 703 comes to coincide with the position of the rotor of the synchro transmitter 702, the current of each phase does not flow any more. (5) The stoppage of the current brings the rotation of the rotor of the synchro receiver 703 to a stop. Hence the position of the rotor of the synchro transmitter 702 is matched to the same of the synchro receiver 703, which means that the transmission-side device and the reception-side device are synchronized with each other in their operation. In this manner, similar to the case of the resolver, when the invention is applied to the synchro transmitter and the synchro receiver each of which outputs a sine-wave signal that changes with the rotation of the rotor, the number of turns for outputting the sine-wave signal can be set easily, which is preferable.

When a synchro transmitter connected to an S/D converter independently makes up a system without pairing with a synchro receiver and the invention is applied to such a synchro transmitter, the number of turns for outputting the sine-wave signal can be set easily, which is preferable.

Explanations of Letters or Numerals

| | |
|---|---|
| 100 | Resolver |
| 200 | Stator |
| 210 | Stator teeth |
| 211 | Slot |
| 300 | Rotor |
| 4 | Exciting wire |
| 5 | Output wire group |
| 51 | Output wire group of the sine phase |
| 52 | Output wire group of the cosine phase |
| 51b, 51d, 51f, 51g, 52a, 52c, 52e, 52g | Output wire |

**Claims**

1. A winding method of winding for a rotation angle detecting or synchronizing apparatus(100) comprising:

    a stator (200) having a plurality of stator teeth(210) formed as an annular chain of stator teeth;
    a rotor (300) disposed to be rotatable relative to the stator (200);
    an exciting wire (4) to which an exciting signal is input, the exciting wire(4) being wound around each of the stator teeth(210) in order such that directions of winding at adjacent stator teeth (210) are opposite to each other; and
    an output wire group (5, 51, 52) formed by connecting output wires (51b, 51d, 51f, 51g, 52a, 52c, 52e, 52g) each wound around each of the stator teeth (210) in series with each other, the output wire group (5,51,52) outputting magnetic flux generated by the exciting wire(4) and changing in correspondence to a rotation angle of the rotor (300), as a sine-wave signal, and wherein
    when a number is assigned to each of the plurality of stator teeth(210) in accordance with order of arrangement of the stator teeth (210), number of turns W(k) of the output wire(51b,51d,51f,51g,52a,52c,52e,52g) wound around a k-th stator tooth of the stator teeth (210) is set by following equation (1):
    [Eq. 1]

$$W(k) = MaxTrn \cdot (-1)^k \cdot \cos\left(2k\pi \cdot \frac{X}{S} + \phi\right) \quad \text{-----} (1)$$

where MaxTrn denotes the maximum number of turns at each of the stator teeth;
S denotes the number of slots;
X denotes the number of poles of the rotor; and
Φ denotes the phase adjusting parameter.

2.  The winding method of winding for the rotation angle detecting or synchronizing apparatus(100) of claim 1, wherein the output wire group (5) outputs an output signal $Vo_{sum}$ represented by following equation (2) :
[Eq. 2]

$$Vo_{sum} = \alpha \cdot \cos(X\theta - \phi - m\pi) \quad \text{-----} (2)$$

where $\alpha = \cos(m\pi)$;

$$m = \frac{X}{S} \; ;$$

and
$\theta$ denotes a rotation angle of the rotor.

3.  A winding method of winding for a rotation angle detecting or synchronizing apparatus(100) comprising:

a stator (200) having a plurality of stator teeth(210) formed as an annular chain of stator teeth;
a rotor (300) disposed to be rotatable relative to the stator (200);
an exciting wire(4) to which an exciting signal is input, the exciting wire(4) being wound around each of the stator teeth(210) in order such that directions of winding at adjacent stator teeth (210) are opposite to each other; and
an output wire group (5, 51, 52) formed by connecting output wires(51b,51d,51f,51g,52a,52c,52e,52g) each wound around each of the stator teeth (210) in series with each other, the output wire group (5, 51, 52) outputting magnetic flux generated by the exciting wire(4) and changing in correspondence to a rotation angle of the rotor (300), as a sine-wave signal, and wherein
when a number is assigned to each of the plurality of stator teeth(210) in accordance with order of arrangement of the stator teeth (210), number of turns W(k) of the output wire (51b, 51d, 51f, 51g, 52a, 52c, 52e, 52g) wound around a k-th stator tooth of the stator teeth(210) is set by following equation (3) :
[Eq. 3]

$$W(k) = MaxTrn \cdot (-1)^k \cdot \sin\left(2k\pi \cdot \frac{X}{S} + \phi\right) \quad \text{-----} (3)$$

where MaxTrn denotes the maximum number of turns at each of the stator teeth;
S denotes the number of slots;
X denotes the number of poles of the rotor; and
Φ denotes the phase adjusting parameter.

4.  The winding method of winding for the rotation angle detecting or synchronizing apparatus(100) of claim 3, wherein the output wire group (5, 51, 52) outputs an output signal $Vo_{sum}$ represented by following equation (4):
[Eq. 4]

$$Vo_{sum} = \alpha \cdot \sin(m\pi + \phi - X\theta) \quad \text{-----} (4)$$

where $\alpha = \cos(m\pi)$;

$$m = \frac{X}{S} \; ;$$

and

$\theta$ denotes a rotation angle of the rotor.

5. The winding method of winding for the rotation angle detecting or synchronizing apparatus(100) of any one of claims 1 to 4, wherein
the rotation angle detecting or synchronizing apparatus(100) comprises the output wire groups (5, 51, 52) of n phases formed by winding the output wires of n phases around each of the stator teeth(210), and wherein
the number of turns W(k) is set by setting the phase adjusting parameter $\Phi$ for adjusting a phase at each output wire group (5, 51, 52) so that output signals output from the output wire groups (5, 51, 52) have a given mutual phase relation.

6. The winding method of winding for the rotation angle detecting or synchronizing apparatus(100) of claim 5, wherein the rotation angle detecting apparatus(100) serves as a resolver having the output wire groups (5, 51, 52) of 2 phases consisting of one output wire group (51) of a sine phase and the other output wire group (52) of a cosine phase.

7. The winding method of winding for the rotation angle detecting or synchronizing apparatus(100) of claim 6, wherein when maximum of the number of turns $W_{sin}(k)$ set by the equation (1) or (3) for the output wire group (51) of the sine phase is $W_{SMAX}$ and maximum of the number of turns $W_{cos}(k)$ set by the equation (1) or (3) for the output wire group (52) of the cosine phase is $W_{CMAX}$, either of the number of turns $W_{sin}(k)$ for the sine phase and the number of turns $W_{cos}(k)$ for the cosine phase is corrected so that the maximum number of turns $W_{SMAX}$ for the sine phase matches the maximum number of turns $W_{CMAX}$ for the cosine phase.

8. The winding method of winding for the rotation angle detecting or synchronizing apparatus(100) of claim 7, wherein the number of turns $W_{cos}(k)$ for the cosine phase is corrected using following equations (5) and (6):
[Eq. 5]

$$Wc = cosMaxTrn/sinMaxTrn \ ----- (5)$$

$$W'_{cos}(k) = Wc \cdot W_{cos}(k) \qquad ----- (6)$$

**Patentansprüche**

1. Wickelverfahren zum Wickeln einer Drehwinkelerfassungs- oder Synchronisiervorrichtung (100), umfassend:

einen Stator (200) mit einer Vielzahl von Statorzähnen (210), welche als ringförmige Kette von Statorzähnen ausgebildet sind;
einen relativ zum Stator (200) drehbar angeordneten Rotor (300);
einen Erregerdraht (4), dem ein Erregersignal zugeführt wird, wobei der Erregerdraht (4) derart um jeden der Statorzähne (210) gewickelt ist, dass die Wickelrichtungen bei benachbarten Statorzähnen (210) einander entgegengesetzt sind; und
eine Gruppe von Ausgangsdrähten (5, 51, 52), ausgebildet durch Verbinden der Ausgangsdrähte (51 b, 51 d, 51 f, 51 g, 52a, 52c, 52e, 52g), wobei die Ausgangsdrähte jeweils um jeden der Statorzähne (210) in Reihe miteinander gewickelt sind, wobei die Gruppe von Ausgangsdrähten (5, 51, 52) einen durch den Erregerdraht (4) erzeugten und in Abhängigkeit vom Rotationswinkel des Rotors (300) wechselnden magnetischen Fluss als Sinuswellen- Signal ausgibt, und
wobei, wenn jedem der Vielzahl von Statorzähnen (210) eine Nummer in Übereinstimmung mit der Reihenfolge der Anordnung der Statorzähne (210) zugeordnet ist, die Windungszahl W(k) des Ausgangsdrahtes (51 b, 51 d, 51 f, 51 g, 52a, 52c, 52e, 52g), gewickelt um einen k-ten Statorzahn der Statorzähne (210), durch folgende Gleichung (1) bestimmt ist:

$$W(k) = MaxTrn * (-1)^k * \cos\left(2k\pi * \frac{X}{S} + \phi\right) \qquad \text{(Gl. 1)}$$

wobei MaxTrn die Maximalzahl der Windungen an jedem der Statorzähne bezeichnet;
S die Anzahl der Steckschlitze bezeichnet;
X die Anzahl der Pole des Rotors bezeichnet; und
$\phi$ den Phasenanpassungs-Parameter bezeichnet.

2. Wickelverfahren zum Wickeln der Drehwinkelerfassungs- oder Synchronisiervorrichtung (100) gemäß Anspruch 1, wobei die Gruppe von Ausgangsdrähten (5) ein Ausgangssignal Vo$_{sum}$ ausgibt, repräsentiert durch folgende Gleichung (2):

$$Vo_{sum} = \alpha * \cos(X\theta - \phi - m\pi) \qquad \text{(Gl. 2)}$$

wobei $\alpha = \cos(m\pi)$;

$$m = \frac{X}{S};$$

und
$\theta$ einen Drehwinkel des Rotors bezeichnet.

3. Wickelverfahren zum Wickeln einer Drehwinkelerfassungs- oder Synchronisiervorrichtung (100), umfassend:

einen Stator (200) mit einer Vielzahl von Statorzähnen (210), welche als ringförmige Kette von Statorzähnen ausgebildet sind;
einen relativ zum Stator (200) drehbar angeordneten Rotor (300);
einen Erregerdraht (4), dem ein Erregersignal zugeführt wird, wobei der Erregerdraht (4) derart um jeden der Statorzähne (210) gewickelt ist, dass die Wickelrichtungen bei benachbarten Statorzähnen (210) einander entgegengesetzt sind; und
eine Gruppe von Ausgangsdrähten (5, 51, 52), ausgebildet durch Verbinden der Ausgangsdrähte (51 b, 51 d, 51 f, 51 g, 52a, 52c, 52e, 52g), wobei die Ausgangsdrähte jeweils um jeden der Statorzähne (210) in Reihe miteinander gewickelt sind, wobei die Gruppe von Ausgangsdrähten (5, 51, 52) einen durch den Erregerdraht (4) erzeugten und in Abhängigkeit vom Rotationswinkel des Rotors (300) wechselnden magnetischen Fluss als Sinuswellen- Signal ausgibt, und
wobei, wenn jedem der Vielzahl von Statorzähnen (210) eine Nummer in Übereinstimmung mit der Reihenfolge der Anordnung der Statorzähne (210) zugeordnet ist, die Windungszahl W(k) des Ausgangsdrahtes (51 b, 51 d, 51 f, 51 g, 52a, 52c, 52e, 52g), gewickelt um einen k-ten Statorzahn der Statorzähne (210), durch folgende Gleichung (3) bestimmt ist:

$$W(k) = MaxTrn * (-1)^k * \sin\left(2k\pi * \frac{X}{S} + \phi\right) \qquad \text{(Gl. 3)}$$

wobei MaxTrn die Maximalzahl der Windungen an jedem der Statorzähne bezeichnet;
S die Anzahl der Steckschlitze bezeichnet;
X die Anzahl der Pole des Rotors bezeichnet; und
$\phi$ den Phasenanpassungs-Parameter bezeichnet.

4. Wickelverfahren zum Wickeln der Drehwinkelerfassungs - oder Synchronisiervorrichtung (100) gemäß Anspruch 3, wobei die Gruppe von Ausgangsdrähten (5, 51, 52) ein Ausgangssignal Vo$_{sum}$ ausgibt, repräsentiert durch folgende Gleichung (4):

$$Vo_{sum} = \alpha * \sin(m\pi + \phi - X\theta) \qquad \text{(Gl. 4)}$$

wobei $\alpha = \cos(m\pi)$;

$$m = \frac{X}{S};$$

und

θ einen Drehwinkel des Rotors bezeichnet.

5. Wickelverfahren zum Wickeln für die Drehwinkelerfassungs- oder Synchronisiervorrichtung (100) gemäß einem der Ansprüche 1 bis 4, wobei die Drehwinkelerfassungs- oder Synchronisiervorrichtung (100) die Gruppen von Ausgangsdrähten (5, 51, 52) von n Phasen umfasst, gebildet durch Wickeln der Ausgangsdrähte von n Phasen um jeden der Statorzähne (210), und
wobei die Anzahl der Windungen W(k) durch Einstellen des Phasenanpassungs-Parameter φ zum Einstellen einer Phase einer jeden Gruppe von Ausgangsdrähten (5, 51, 52) derart eingerichtet wird, dass die Ausgangssignale der Gruppen von Ausgangsdrähten (5, 51, 52) eine bestimmte gegenseitige Phasenbeziehung aufweisen.

6. Wickelverfahren zum Wickeln für die Drehwinkelerfassungs- oder Synchronisiervorrichtung (100) gemäß Anspruch 5,
wobei die Drehwinkelerfassungsvorrichtung (100) als ein Drehmelder dient, wobei die Gruppen von Ausgangsdrähten (5, 51, 52) zwei Phasen aufweisen bestehend aus einer Gruppe von Ausgangsdrähten (51) mit einer Sinusphase und der anderen Gruppe von Ausgangsdrähten (52) mit einer Kosinus-Phase.

7. Wickelverfahren zum Wickeln für die Drehwinkelerfassungs- bzw. Synchronisiervorrichtung (100) gemäß Anspruch 6,
wobei, wenn $W_{SMAX}$ die durch die Gleichung (1) oder (3) für die Gruppe von Ausgangsdrähten (51) mit Sinusphase bestimmte Maximalzahl der Windungen $W_{sin}(k)$ ist und $W_{CMAX}$ die durch die Gleichung (1) oder (3) für die Gruppe von Ausgangsdrähten (52) mit Kosinus-Phase bestimmte Maximalzahl der Windungen $W_{cos}(k)$ ist, entweder die Zahl der Windungen $W_{sin}(k)$ für die Sinusphase oder die Zahl der Windungen $W_{cos}(k)$ für die Kosinus-Phase so korrigiert wird, dass die Maximalzahl der Windungen $W_{SMAX}$ für die Sinusphase mit der Maximalzahl von Windungen $W_{CMAX}$ für die Kosinus-Phase übereinstimmt.

8. Wickelverfahren zum Wickeln für die Drehwinkelerfassungs- oder Synchronisiervorrichtung (100) gemäß Anspruch 7,
wobei die Anzahl der Windungen $W_{cos}(k)$ für die Kosinus-Phase mit folgenden Gleichungen (5) und (6) korrigiert wird:

$$Wc = \cos MaxTrn / \sin MaxTrn \qquad \text{(Gl. 5)}$$

$$W'_{cos}(k) = Wc * W_{cos}(k) \qquad \text{(Gl. 6)}.$$

**Revendications**

1. Procédé d'enroulement pour un dispositif (100) de détection d'angle de rotation ou de synchronisation, comprenant :

un stator (200) présentant une pluralité de dents (210) de stator sous la forme d'une chaîne annulaire de dents de stator ;
un rotor (300) agencé de manière à être rotatif par rapport au stator (200) ;
un fil d'excitation (4) vers lequel un signal d'excitation est émis, ledit fil d'excitation (4) étant enroulé autour de chacune des dents de stator (210) de manière à opposer l'une à l'autre les directions d'enroulement sur des dents (210) de stator adjacentes ; et
un groupe de fils de sortie (5, 51, 52) formé par connexion en série de fils de sortie (51 b, 51 d, 51 f, 51 g, 52a, 52c, 52e, 52g) enroulés chacun autour d'une dent de stator (210), ledit groupe de fils de sortie (5, 51, 52) émettant un flux magnétique généré par le fil d'excitation (4) et variant en fonction d'un angle de rotation du rotor (300) en tant que signal sinusoïdal, et où,

lorsqu'un nombre est attribué à chaque dent de la pluralité de dents (210) de stator en fonction de l'ordre de disposition des dents (210) de stator, le nombre de tours W(k) du fil de sortie (51 b, 51 d, 51 f, 51 g, 52a, 52c, 52e, 52g) enroulé autour d'une kᵢᵉᵐᵉ dent des dents (210) du stator est défini par l'équation (1) suivante :

$$W(k) = MaxTrn * (-1)^k * \cos\left(2k\pi * \frac{X}{S} + \phi\right) \quad \text{(éq. 1)}$$

où MaxTrn représente le nombre de tours maximum sur chacune des dents de stator ;

S représente le nombre d'encoches ;

X représente le nombre de pôles du rotor ; et

$\phi$ représente le paramètre de définition de phase.

2. Procédé d'enroulement pour un dispositif (100) de détection d'angle de rotation ou de synchronisation selon la revendication 1, où le groupe de fils de sortie (5) émet un signal de sortie $Vo_{sum}$ défini par l'équation (2) suivante:

$$Vo_{sum} = \alpha * \cos(X\theta - \phi - m\pi) \quad \text{(éq. 2)}$$

où $\alpha = \cos(m\pi)$;

$$m = \frac{X}{S};$$

et

$\theta$ représente un angle de rotation du rotor.

3. Procédé d'enroulement pour un dispositif (100) de détection d'angle de rotation ou de synchronisation, comprenant :

un stator (200) présentant une pluralité de dents (210) de stator sous la forme d'une chaîne annulaire de dents de stator ;

un rotor (300) agencé de manière à être rotatif par rapport au stator (200) ;

un fil d'excitation (4) vers lequel un signal d'excitation est émis, ledit fil d'excitation (4) étant enroulé autour de chacune des dents de stator (210) de manière à opposer l'une à l'autre les directions d'enroulement sur des dents (210) de stator adjacentes ; et

un groupe de fils de sortie (5, 51, 52) formé par connexion en série de fils de sortie (51 b, 51 d, 51 f, 51 g, 52a, 52c, 52e, 52g) enroulés chacun autour d'une dent de stator (210), ledit groupe de fils de sortie (5, 51, 52) émettant un flux magnétique généré par le fil d'excitation (4) et variant en fonction d'un angle de rotation du rotor (300) en tant que signal sinusoïdal, et où,

lorsqu'un nombre est attribué à chaque dent de la pluralité de dents (210) de stator en fonction de l'ordre de disposition des dents (210) de stator, le nombre de tours W(k) du fil de sortie (51 b, 51 d, 51 f, 51 g, 52a, 52c, 52e, 52g) enroulé autour d'une kᵢᵉᵐᵉ dent des dents (210) du stator est défini par l'équation (3) suivante :

$$W(k) = MaxTrn * (-1)^k * \sin\left(2k\pi * \frac{X}{S} + \phi\right) \quad \text{(éq. 3)}$$

où MaxTrn représente le nombre de tours maximum sur chacune des dents de stator ;

S représente le nombre d'encoches ;

X représente le nombre de pôles du rotor ; et

$\phi$ représente le paramètre de définition de phase.

4. Procédé d'enroulement pour un dispositif (100) de détection d'angle de rotation ou de synchronisation selon la revendication 3, où le groupe de fils de sortie (5, 51, 52) émet un signal de sortie $Vo_{sum}$ défini par l'équation (4) suivante:

$$Vo_{sum} = \alpha * \sin(m\pi + \phi - X\theta) \quad (\text{éq. 4})$$

où $\alpha = \cos(m\pi)$;

$$m = \frac{X}{S};$$

et

$\theta$ représente un angle de rotation du rotor.

5. Procédé d'enroulement pour un dispositif (100) de détection d'angle de rotation ou de synchronisation selon l'une des revendications 1 à 4, où
le dispositif (100) de détection d'angle de rotation ou de synchronisation comprend le groupe de fils de sorties (5, 51, 52) de n phases formées par enroulement des fils de sortie de n phases autour de chacune des dents (210) de stator, et où
le nombre de tours W(k) est fixé par définition du paramètre de réglage de phase $\phi$ pour le réglage d'une phase sur chaque groupe de fils de sortie (5 , 51, 52), de telle manière que des signaux de sortie émis par les groupes de fils de sortie (5 , 51, 52) présentent une relation de phases mutuelles donnée.

6. Procédé d'enroulement pour un dispositif (100) de détection d'angle de rotation ou de synchronisation selon la revendication 5, où le dispositif (100) de détection d'angle de rotation sert de résolveur présentant le groupe de fils de sorties (5, 51, 52) de 2 phases consistant en un groupe de fils de sortie (51) d'un sinus de phase et en un autre groupe de fils de sortie (52) d'un cosinus de phase.

7. Procédé d'enroulement pour un dispositif (100) de détection d'angle de rotation ou de synchronisation selon la revendication 6, où,
si un maximum du nombre de tours $W_{sin}(k)$ défini par l'équation (1) ou l'équation (3) pour le groupe de fils de sortie (51) du sinus de phase est $W_{SMAX}$ et un maximum du nombre de tours $W_{cos}(k)$ défini par l'équation (1) ou l'équation (3) pour le groupe de fils de sortie (52) du cosinus de phase est $W_{CMAX}$, le nombre de tours $W_{sin}(k)$ pour le sinus de phase ou le nombre de tours $W_{cos}(k)$ pour le cosinus de phase est corrigé de telle manière que le nombre de tours maximum $W_{SMAX}$ pour le sinus de phase atteigne le nombre de tours maximum $W_{CMAX}$ pour le cosinus de phase.

8. Procédé d'enroulement pour un dispositif (100) de détection d'angle de rotation ou de synchronisation selon la revendication 7, où le nombre de tours $W_{cos}(k)$ pour le cosinus de phase est corrigé en recourant aux équations (5) et (6) suivantes :

$$Wc = \cos MaxTrn / \sin MaxTrn \quad (\text{éq. 5})$$

$$W'_{cos}(k) = Wc * W_{cos}(k) \quad (\text{éq. 6})$$

FIG.1

100

FIG.2

FIG.3A

FIG.3B

SINE PHASE — COSINE PHASE

# FIG.4

FIG.5

300

250

100

FIG.6

FIG.7A

FIG.7B

FIG.8A

FIG.8B

FIG.9

# FIG.10

801

802

OUTPUT SIGNAL
OF FIRST PHASE
(SINE PHASE)

OUTPUT SIGNAL
OF SECOND PHASE
(COSINE PHASE)

CONTROL
UNIT — 803

COIL CURRENT CONTROL

FIG.11

## FIG.12

## FIG.13

701
704
702
703

OUTPUT SIGNAL OF THIRD PHASE

TX

TR

OUTPUT SIGNAL OF SECOND PHASE

OUTPUT SIGNAL OF FIRST PHASE

**REFERENCES CITED IN THE DESCRIPTION**

**Patent documents cited in the description**

- JP 3171737 B